# EUROPEAN PATENT APPLICATION

(11) **EP 2 887 214 A1**
(43) Date of publication of application: **24.06.2015**
(21) Application number: 13831233.5
(22) Date of filing: 26.06.2013
(51) Int. Cl.: G06F 9/445, H04L 29/08, H04W 4/00, H04L 29/06, G06F 13/00

(54) **SEAMLESS PUSH SYSTEM AND METHOD FOR SAME**

(30) Priority: 20.08.2012 WO PCT/JP2012/070971
(71) Applicant: Fujitsu Limited, Kawasaki-shi, Kanagawa 211-8588 (JP)
(72) Inventor: NAKAMURA Yosuke, Kawasaki-shi Kanagawa 211-8588 (JP); NIMURA Kazuaki, Kawasaki-shi Kanagawa 211-8588 (JP); ITO Hidenobu, Kawasaki-shi Kanagawa 211-8588 (JP)
(74) Representative: Fenlon, Christine Lesley
(86) International application number: PCT/JP2013/067437
(87) International publication number: WO 2014/030426

(57) **Abstract**

A seamless push system has a first push gateway within an intranet and which, in response to a transmission request for a push message, transmits the push message to a terminal in a connected state via the intranet, and a second push gateway within the Internet and which is capable of maintaining a connected state with the terminal via the Internet. When the terminal can be connected to the Internet, the second push gateway establishes a connected state from the terminal via the Internet and maintains the connected state, the first push gateway transfers the push message to the second push gateway in response to the transmission request for the push message, and the second push gateway transmits the push message via the Internet to the terminal in the connected state in response to the transfer of the push message.

## Description

### TECHNICAL FIELD

The present embodiment relates to a seamless push system and a method for the same.

### BACKGROUND ART

A push system provides a service that enables a message or an application program (hereinafter referred to as an application) to be sent to a terminal of a user at a timing desired by the user regardless of the location thereof. For example, when the terminal can be connected to an intranet of a company, a message or an application is sent to the terminal via the intranet.

A description of an application push is given in Non-Patent Literature 1.

In order to send the message and application to the terminal, it is necessary to send them to the terminal by any reason not only a case where the terminal can be connected to an intranet, but also a case where the terminal can be connected to an internet outside the intranet of the company.

### CITATION LIST

### PATENT LITERATURE

PATENT LITERATURE 1: Japanese Laid-open Patent Publication No. 2006-331126
PATENT LITERATURE 2: Japanese Laid-open Patent Publication No. 2003-229880
PATENT LITERATURE 3: Japanese Laid-open Patent Publication No.H2-275563
PATENT LITERATURE 4: Japanese Laid-open Patent Publication No. 2002-135350
PATENT LITERATURE 5: Japanese Patent No.4706178

### NON-PATENT LITERATURE

NON-PATENT LITERATURE 1:
http://pr.fujitsu.com/jp/news/2011/07/19-1.html

### SUMMARY OF INVENTION

### PROBLEMS TO BE SOLVED BY THE INVENTION

However, since applications used in the course of business may sometimes include secret information, from the perspective of security, an application to be sent to a terminal has to be stored in a server inside an intranet. In addition, in order to perform a push transmission of an application, a push message is transmitted to a terminal and the terminal is caused to download the application in response to the push message. In some cases, such a push message includes download destination information. Therefore, from the perspective of protecting secret information, the push message has to be stored in a server within an intranet.

In the cases described above, when a terminal is connected to the Internet outside of an intranet, how a push message is transmitted and how the terminal is caused to download an application becomes an issue.

In consideration thereof, an object of the present embodiment is to provide a seamless push system and a method for the same which are capable of seamlessly sending a message or an application to a terminal even when the terminal is connected to the Internet outside of an intranet.

### MEANS FOR SOLVING PROBLEM

A seamless push system comprising a first push gateway which is provided within an intranet and which, in response to a transmission request for a push message, transmits the push message to a terminal in a connected state via the intranet and a second push gateway which is provided within the Internet and which is capable of maintaining a connected state with the terminal via the Internet, wherein when the terminal is capable of connecting to the Internet, the second push gateway establishes a connected state from the terminal via the Internet and maintains the connected state, the first push gateway transfers the push message to the second push gateway in response to the transmission request for the push message, and the second push gateway transmits the push message via the Internet to the terminal in the connected state in response to the transfer of the push message.

### ADVANTAGEOUS EFFECTS OF THE INVENTION

According to a first aspect, a message or an application is sent to a terminal even when the terminal is connected to the Internet.

### BRIEF DESCRIPTION OF THE DRAWINGS

FIG. 1 is a diagram for explaining an outline of a push system.
FIG. 2 is a diagram for explaining an outline of a seamless push system.
FIG. 3 is a flow chart representing general operations of the application push system illustrated in FIG. 2.
FIG. 4 is a configuration diagram of a seamless push system according to the present embodiment.
FIG. 5 is a diagram illustrating databases of the push gateways Pri-PGW and Pub-PGW and the terminal DS.
FIG. 6 is a diagram illustrating an application push operation (1) to a terminal within an intranet of the seamless application push system according to the present embodiment.
FIG. 7 is a flow chart depicting the application push operation illustrated in FIG. 6.
FIG. 8 is a diagram illustrating an application push operation (2) to a terminal within an intranet of the seamless application push system according to the present embodiment.
FIG. 9 is a diagram illustrating an application push operation (2) to a terminal within an intranet of the seamless application push system according to the present embodiment.
FIG. 10 is a flow chart depicting the application push operation illustrated in FIGS. 8 and 9.
FIG. 11 is a diagram illustrating commands that are exchanged between the two push gateways.
FIG. 12 is a diagram illustrating an application push operation (1) to a terminal within the Internet of the seamless application push system according to the present embodiment.
FIG. 13 is a flow chart depicting the application push operation illustrated in FIG. 12.
FIG. 14 is a flow chart depicting the application push operation illustrated in FIG. 12.
FIG. 15 is a diagram illustrating an application push operation (2) to a terminal within the Internet of the seamless application push system according to the present embodiment.
FIG. 16 is a diagram illustrating an application push operation (2) to a terminal within the Internet of the seamless application push system according to the present embodiment.
FIG. 17 is a flow chart depicting the application push operation illustrated in FIGS. 15 and 16.
FIG. 18 is a flow chart depicting the application push operation illustrated in FIGS. 15 and 16.
FIG. 19 is a flow chart depicting the application push operation illustrated in FIGS. 15 and 16.
FIG. 20 is a diagram illustrating hardware configurations of the private push gateway Pri-PGW, the public push gateway Pub-PGW, and the terminal SD illustrated in FIG. 4.
FIG. 21 is a diagram illustrating an application push operation (1) to a terminal within the Internet according to the second embodiment.
FIG. 22 is a diagram illustrating an application push operation (2) to a terminal within the Internet according to the second embodiment.
FIG. 23 is a diagram showing the command system according to the third embodiment.
FIG. 24 is a first flow chart illustrating an application push operation (1) to a terminal within the Internet according to the third embodiment.
FIG. 25 is a second flow chart illustrating an application push operation (1) to a terminal within the Internet according to the third embodiment.
FIG. 26 is a second flow chart illustrating an application push operation (1) to a terminal within the Internet according to the third embodiment.
FIG. 27 is a flow chart illustrating an application push operation (2) to a terminal within the Internet according to the third embodiment.
FIG. 28 is a flow chart illustrating an application push operation (2) to a terminal within the Internet according to the third embodiment.
FIG. 29 is a flow chart illustrating an application push operation (2) to a terminal within the Internet according to the third embodiment.
FIG. 30 is a diagram illustrating a multi-tenant type push service.
FIG. 31 is a configuration diagram of a seamless push system according to a fourth embodiment.

### DESCRIPTION OF EMBODIMENTS

### [Outline of seamless push]

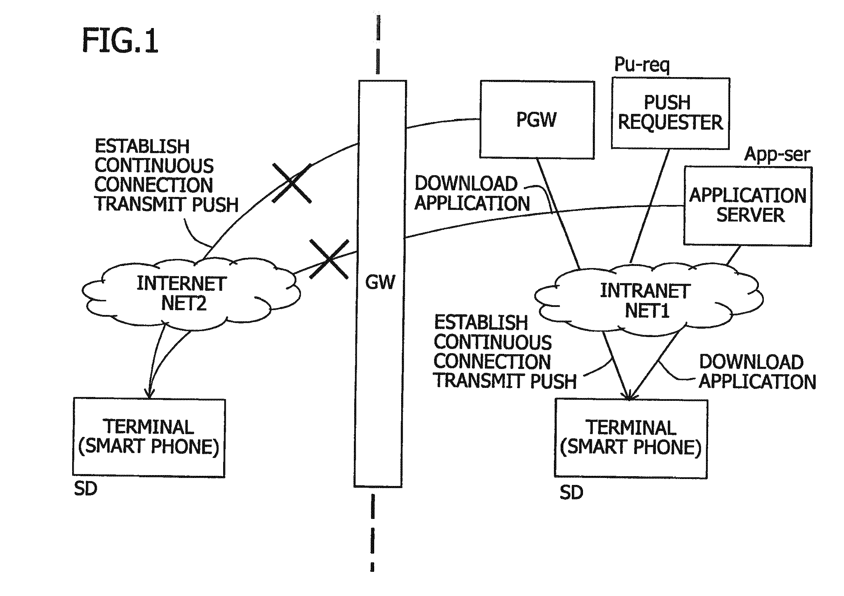

FIG. 1 is a diagram for explaining an outline of a push system. The push system illustrated in FIG. 1 is constructed within an intranet NET1 in a company, a school, or the like. The intranet NET1 is protected by a gateway GW that is a firewall or the like from the Internet NET2 outside the intranet NET1. Therefore, the push system includes, within the intranet NET1, a push requester device Pu-req that requests transmission of a push message, a push gateway PGW that transmits the push message to a terminal SD of a user, and an application server App-ser that transmits an application to the terminal SD. The push requester device Pu-req, the push gateway PGW, and the application server App-ser are connectable to one another via the intranet NET1.

The push requester device Pu-req is a server or a terminal of a service provider that provides a service for performing push transmission of an application to the terminal SD of a user. The push requester device Pu-req issues a request for a push message to the push gateway PGW. A push message is a message that acts as a trigger to cause the terminal to download an application and includes, for example, download destination information. The push gateway PGW is a server that performs push transmission of the requested push message to the terminal SD of a user. In addition, the application server App-ser is a server that transmits an application to the terminal SD of a user. Furthermore, the terminal SD of a user is a terminal capable of moving anywhere and is, for example, a smart phone, a smart pad terminal, or a PC which will be collectively referred to as, for example, a smart device (SD). The terminal SD can be connected by WiFi to a wireless LAN within an intranet or within the Internet and can also be connected to the Internet via a 3G public telephone network.

The push gateway PGW and the terminal SD are capable of establishing a connected state by a TCP protocol or the like and maintaining the connected state. By placing the terminal SD in a continuously connected state in this manner, the push gateway PGW can perform a push transmission of a push message to the terminal SD at any time. In addition, when a push transmission of a push message is performed to the terminal SD, the terminal SD is connected to the application server App-ser, downloads an application corresponding to the push message from the application server App-ser, and executes the application.

General operations are as follows. The terminal SD has established a connection with the push gateway PGW in advance and is maintaining the connected state. First, the push requester device Pu-req transmits a transmission request of a push message to the push gateway PGW. Push transmission destination information indicating which terminal SD is to be a destination of the push transmission is attached to the push message. In response thereto, the push gateway PGW transmits a push message to a terminal SD that is a push transmission destination maintaining a connected state.

Information such as a URL of a download destination is embedded in the push message. Based on download destination information in the push message, a downloader application in the terminal SD connects to the application server App-ser and downloads a corresponding application. Subsequently, the terminal SD executes the downloaded application on the terminal SD.

As described above, as long as a connected state with the push gateway PGW is maintained, the terminal SD of a user receives a push gateway and downloads and executes a corresponding application at any time. As a result, a push service of the application can be provided. While an application used in business includes secret information of a company, since the application server App-ser is installed within the intranet NET1 having high security, a risk of leakage of secret information is low. In addition, while a push message also includes secret information such as a URL of a download destination of the application, since the push requester device Pu-req is also installed within the intranet NET1, security problems hardly occur. Furthermore, while the push gateway PGW also has to store push transmission destination information, an ID, a password PW of a push requester, and the like which enable transmission of a push message, since the push gateway PGW is also installed within the intranet NET1, security problems hardly occur.

A condition of enabling an application to be sent to the terminal SD at any time is that the terminal SD maintains a connected state with the push gateway PGW. On the other hand, as described above, the push gateway PGW is installed within the intranet NET1. Therefore, when the terminal SD moves from the intranet NET1 to the Internet NET2, maintaining a connected state between the terminal SD and the push gateway PGW poses a problem in that the connected state is blocked by a gateway GW of the intranet. Furthermore, downloading of an application from the application server App-ser by the terminal SD having moved to the Internet NET2 also poses a problem of a firewall provided by the gateway GW.

For example, when the terminal SD is being connected to the Internet NET2, conceivably, the terminal SD constructs a communication route with a push system within the intranet NET1 using a virtual private network VPN and creates a continuously connected state with the push gateway PGW. However, since a third party may conceivably access the intranet NET1 via a VPN formed by a terminal SD within the Internet outside of the company, a security problem remains.

### [Outline of seamless push system]

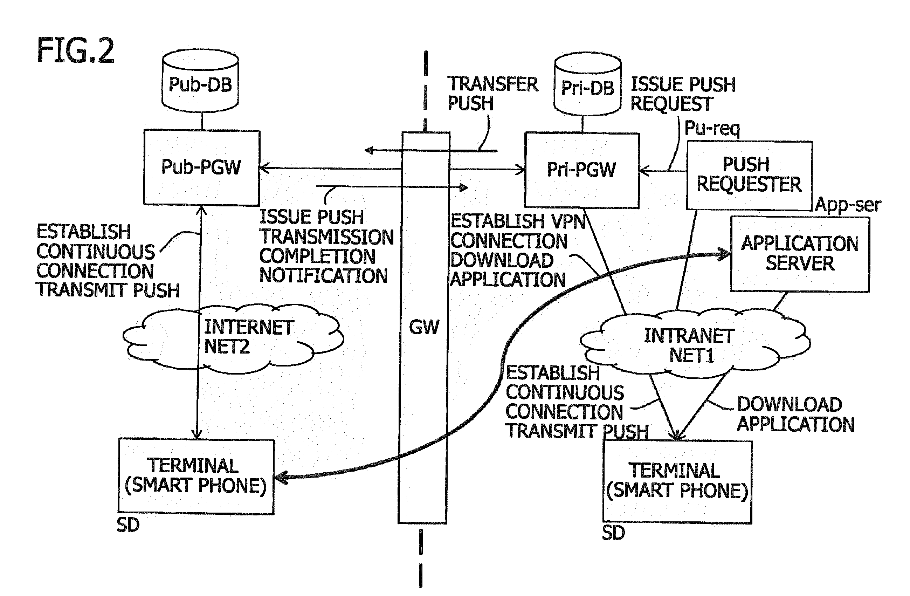

FIG. 2 is a diagram for explaining an outline of a seamless push system. According to the push system illustrated in FIG. 2, even when the terminal SD of a user moves to the Internet NET2, an application is seamlessly sent to the terminal SD.

In FIG. 2, the push requester device Pu-req and the application server App-ser in the intranet NET1 are the same as those in FIG. 1. A different configuration from FIG. 1 is that a private push gateway Pri-PGW is installed within the intranet NET1 and a public push gateway Pub-PGW is installed within the Internet NET2. In addition, both gateways Pri-PGW and Pub-PGW cooperate with each other so as to be capable of transmitting and receiving prescribed commands.

Furthermore, for example, characteristic points are as described below. Firstly, a terminal SD within the Internet NET2 can access the public push gateway Pub-PGW via the Internet NET2, establish a connection by a TCP protocol or the like, and maintain the connected state.

Secondly, while the private push gateway Pri-PGW has a database Pri-DB which stores transmission destination information of a push message, push requester information, a push message awaiting retransmission, and the like, a database Pub-DB of the public push gateway Pub-PGW installed on the Internet NET2 does not store such secret information. The database Pub-DB of the public push gateway Pub-PGW stores only information with low or no secrecy such as a device ID of a terminal SD in a connected state. Using this connected state, the private push gateway Pri-PGW can perform a push transmission of a push message to the terminal SD via the public push gateway Pub-PGW and the Internet NET2.

Thirdly, upon receiving the push message, the terminal SD forms a virtual private network VPN to an application server App-ser of a push system within the intranet NET1 and downloads an application from the application server App-ser via a communication route of the VPN. Moreover, in order to enable a push reception of a push message to be performed even when the VPN is being formed, the terminal SD establishes a connection with the private push gateway Pri-PGW via the VPN and maintains the connected state.

This VPN is a technique for connecting a terminal on the Internet to a specific local area network (LAN) and is referred to as a remote-type VPN among VPNs that utilize the Internet. VPNs are a technique that enables safe communication by preventing illegal access such as peeking and tampering and is a private network realized using a public network such as the Internet. One characteristic of a VPN is that the VPN encapsulates a packet and transmits the packet by tunneling and that the VPN encodes the packet. In the example illustrated in FIG. 2, a VPN is constructed in order to enable a terminal SD on the Internet to be connected to an application server APP-ser in an intranet to obtain a safe communication route.

### [General operations of application push]

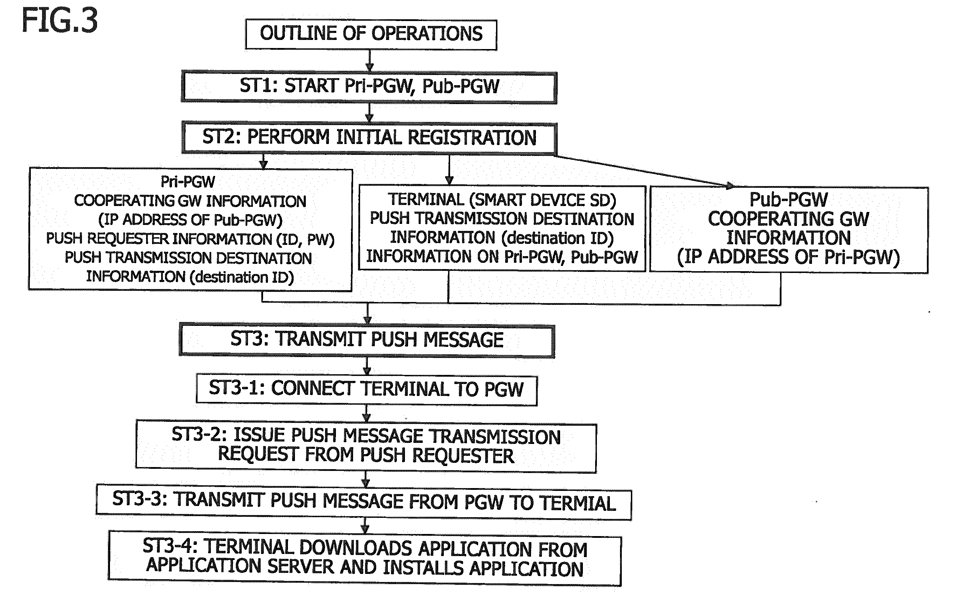

FIG. 3 is a flow chart representing general operations of the application push system illustrated in FIG. 2. First, both push gateways Pri-PGW and Pub-PGW are started (ST1) and initial registration is performed (ST2). In the initial registration, the private push gateway Pri-PGW sets an IP address of the public push gateway Pub-PGW that is a cooperation partner, an ID and a password PW of a push requester device, and push transmission destination information (destination ID). In addition, a terminal SD sets the push destination information, IP information of both push gateways Pri-PGW and Pub-PGW, and the like. Furthermore, the public push gateway Pub-PGW sets an IP address of the private push gateway Pri-PGW that is a cooperation partner. For example, the push transmission destination information (destination ID, dest) may be information indicating a certain downloader application in a certain terminal or may simply be a terminal ID (device ID).

Next, a push message is transmitted (ST3). Specifically, the terminal SD establishes a connection with the push gateway PGW in advance and maintains the connected state (ST3-1). A push requester device Pu-req then transmits a transmission request for a push message to the push gateway PGW (ST3-2) and the push gateway PGW performs a push transmission of a push message to the terminal SD being connected (ST3-3).

In response thereto, the terminal SD accesses an application server App-ser to download an application and executes the application (ST4). The download and execution by the terminal SD is automatically performed by a dedicated application.

As described above, the seamless push system illustrated in FIG. 2 provides an application push service by performing initial registration ST2, transmission ST3 of a push message, and download and execution ST4 of an application based on the push message. Hereinafter, an outline of operations when a terminal moves into the Internet will be described.

### [When terminal SD is within intranet]

When a terminal SD is within the intranet NET1, the terminal SD can be connected to the intranet. In this case, as described with reference to FIG. 1, the private push gateway Pri-PGW performs a push transmission of a requested push message to a terminal SD that is in a connected state in advance and, in response to the push message, the terminal SD is connected to an application server App-ser via the intranet and downloads and installs an application.

### [When terminal SD within Internet is in connected state]

When a terminal SD is within the Internet NET2, the terminal SD can be connected to the Internet. Operations in which an application is sent in this case will now be described. First, the private push gateway Pri-PGW and the public push gateway Pub-PGW exchange information such as their respective IP addresses and respectively set the information to themselves. In addition, push transmission destination information that indicates a transmission destination of a push message, push requester information, and the like are set in advance to the private push gateway Pri-PGW and stored in a database Pub-DB. The push transmission destination information is also set to the terminal SD. Moreover, the terminal SD has a terminal ID (device ID).

In addition, the terminal SD that can be connected to the Internet NET2 by 3G or WiFi establishes a connection with the public push gateway Pub-PGW by a TCP protocol and maintains the connected state. The connected terminal information is recorded in the database Pub-DB of the public push gateway Pub-PGW. In this state, the push requester device Pu-req transmits a request for a push message (push request) to the private push gateway Pri-PGW. In this case, since the terminal SD is outside of an intranet, the terminal SD is not maintaining a connected state with the private push gateway Pri-PGW. Therefore, the private push gateway Pri-PGW transmits a transfer command of a push message (push transfer command) to the public push gateway Pub-PGW together with the push message. The push transfer command is transmitted by, for example, an HTTP protocol.

In response to the push transfer command, the public push gateway Pub-PGW refers to the database Pub-DB to confirm that the terminal SD that is a push message transmission destination is in a connected state and performs a push transmission of the push message to the terminal SD. In response thereto, the terminal SD constructs a virtual private network VPN with the application server App-ser within the intranet NET1, accesses a URL that is embedded in the push message, and automatically downloads an application. In addition, the terminal SD executes the downloaded application.

As described above, the private push gateway Pri-PGW is capable of performing a push transmission of a push message to the terminal SD and sending an application at any time even when the terminal SD can be connected to the Internet NET2. In addition, a continuously connected state of the terminal SD is established with respect to the public push gateway Pub-PGW that is installed within the Internet NET2 without involving the gateway GW. Furthermore, since the terminal SD forms a virtual private network VPN with a push system within the intranet NET1 only when downloading an application, security can be maintained at a high level. Moreover, the public push gateway Pub-PGW installed within the Internet NET2 only stores connection information with a terminal SD (a terminal ID (device ID) in a connected state) and need not store information having secrecy such as a push message, push transmission destination information, and push requester information.

### [When terminal SD within Internet is in unconnected state]

Furthermore, with the seamless push system illustrated in FIG. 2, even in a case where a connection is not maintained between the terminal SD and the public push gateway Pub-PGW, when a connection is subsequently established, a push transmission of an untransmitted push message stored in a retransmission queue in the database Pri-DB of the private push gateway Pri-PGW can be performed in response to the establishment of the connection.

An outline of operations thereof is as follows. As described earlier, after initial registration is performed, the push requester device Pu-req transmits a transmission request for a push message to the private push gateway Pri-PGW. Since a transmission destination terminal SD is not in a connected state via the intranet NET1, the private push gateway Pri-PGW stores the push message and push transmission destination information in the retransmission queue in the database Pri-DB. Subsequently, the private push gateway Pri-PGW transmits a push transfer command to the public push gateway Pub-PGW.

When the terminal SD is in a connected state via the Internet NET2, the public push gateway Pub-PGW performs a push transmission of the transferred push message, and when an acknowledgement ACK of the push transmission is received from the terminal SD in response to the push transmission of the push message, the public push gateway Pub-PGW transmits a push transmission completion notification command to the private push gateway Pri-PGW. In response thereto, the private push gateway Pri-PGW changes the push message stored in the retransmission queue in the database Pri-DB to "already transmitted".

However, when the terminal SD has not established a connection with the public push gateway Pub-PGW, the public push gateway Pub-PGW is not able to perform a push transmission of the transferred push message to the terminal SD. Therefore, a push transmission completion notification command is not transmitted to the private push gateway Pri-PGW and a push message remains in the retransmission queue in the database Pri-DB.

Subsequently, when the terminal SD changes to a state where the terminal SD can be connected to the Internet NET2 by having a power supply switched from off to on or by being moved to a location where the terminal SD can be connected to the Internet, the terminal SD establishes a connection with the public push gateway Pub-PGW by a TCP protocol. In response to the connection of the terminal SD, the public push gateway Pub-PGW transmits a retransmission inquiry command that inquires whether or not a push message intended for the newly connected terminal SD is awaiting retransmission to the private push gateway Pri-PGW.

The private push gateway Pri-PGW then checks a retransmission queue in the database Pri-DB and, if an inquired push message which is intended for the terminal SD and which is awaiting retransmission is stored in the retransmission queue, the private push gateway Pri-PGW transmits a push transfer command to the public push gateway Pub-PGW. In response thereto, the public push gateway Pub-PGW performs a push transmission of the transferred push message to the terminal SD. Subsequently, the terminal SD establishes a VNP to the application server App-ser and downloads and executes an application.

During the operations described above, the public push gateway Pub-PGW having received the push transfer command discards the transferred push message instead of storing the transferred push message in the database Pub-DB, when a connection has not been established by the terminal SD at this point, in order to prevent secret information from being exposed on the Internet.

In addition, even when a VPN is being formed by the terminal SD with a push system within an intranet, in order to enable push transmission of a push message, the terminal SD desirably establishes a connection with the private push gateway Pri-PGW within the intranet via the VPN and maintains the connected state. Accordingly, a push message can be received even when downloading an application.

Furthermore, when a push transmission completion notification is not received after transmitting a push transfer command, the private push gateway Pri-PGW may be configured to periodically repeat transmission of the push transfer command. Alternatively, transmission of a push message in the retransmission queue upon receiving a retransmission inquiry command in response to a push transfer command may be combined with periodic transmission of a push transfer command with respect to a push message in the retransmission queue.

As described above, according to the seamless push system illustrated in FIG. 2, even with respect to a terminal SD having moved into the Internet, a push transmission of a push message can be performed and an application can be sent at any time or when the terminal SD establishes a connection via the Internet while maintaining security of a system within an intranet with respect to outside of the intranet.

Hereinafter, a specific description of a seamless push system and operations thereof according to a first embodiment will be given.

### [First embodiment]

### [Configuration of seamless push system]

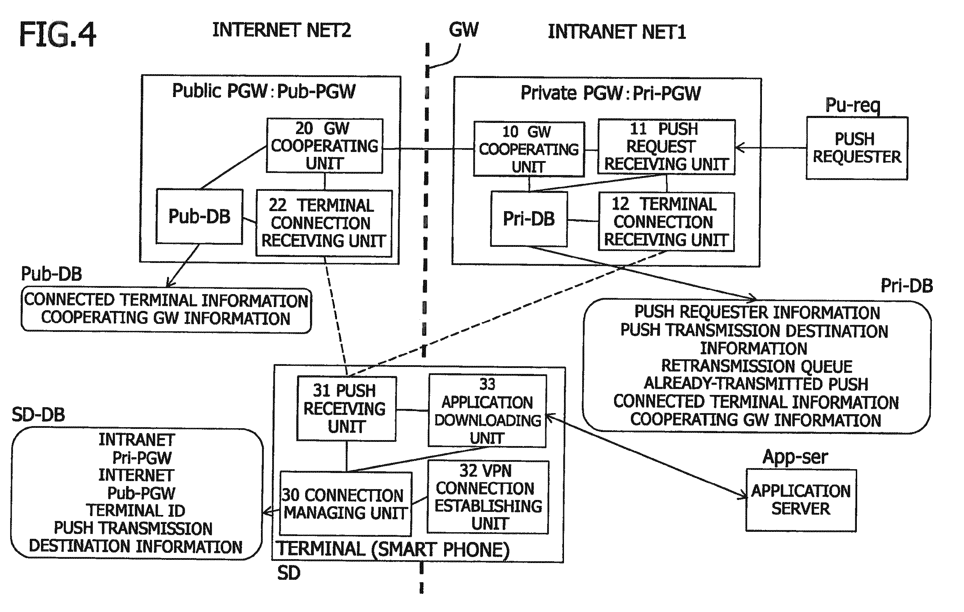

FIG. 4 is a configuration diagram of a seamless push system according to the present embodiment. In a similar manner to FIG. 2, a push requester device Pu-req that requests transmission of a push message, a private push gateway Pri-PGW that transmits the push message to a terminal SD that is a push transmission destination, and an application server App-ser that downloads an application to the terminal SD are provided within an intranet NET1.

Meanwhile, within the Internet NET2, provided is a public push gateway Pub-PGW that transmits a push message to the terminal SD that is a push transmission destination. In addition, the terminal SD is connected to the intranet NET1 when the terminal SD is being located within the intranet NET1 and connected to the Internet NET2 when the terminal SD is being located within the Internet. A gateway GW that constitutes a firewall is provided between the intranet NET1 and the Internet NET2 and maintains security within the intranet NET1.

The private push gateway Pri-PGW includes a push request receiving unit 11 which receives a transmission request for a push message from the push requester device Pu-req, a terminal connection receiving unit 12 which receives a connection request by a TCP protocol or the like from a push receiving unit 31 of the terminal SD within the intranet, maintains a connected state via the intranet, and sends a push message to the terminal SD being connected, a gateway cooperating unit 10 which performs transfer of a push message and synchronization of a transmission status of a push message in cooperation with the public push gateway Pub-PGW, and a database Pri-DB which stores necessary data including secret information and private information. The push request receiving unit 11, the terminal connection receiving unit 12, and the gateway cooperating unit 10 are realized by installing software in a server.

The application server App-ser includes an application downloading unit (not illustrated) which retains a database of an application to be sent to a terminal and which receives an application download request from an application downloading unit 33 of the terminal SD.

Meanwhile, the public push gateway Pub-PGW includes a terminal connection receiving unit 22, a gateway cooperating unit 20, and a database Pub-DB. The terminal connection receiving unit 22, the gateway cooperating unit 20, and the database Pub-DB are realized by installing software in a server. The terminal connection receiving unit 22 receives a connection request by a TCP protocol or the like from the push receiving unit 31 of the terminal SD within the Internet, maintains the connected state via the Internet, and sends to the terminal SD being connected a push message having been transferred from the private push gateway Pri-PGW. The gateway cooperating unit 20 performs transfer of a push message and synchronization of a transmission status of a push message in cooperation with the private push gateway Pri-PGW. The database Pub-DB stores necessary data excluding secret information and private information. The database Pub-DB includes information such as an IP address of the cooperating private push gateway Pri-PGW (cooperating GW information) and information on a terminal SD having established a connected state with the terminal connection receiving unit 22 via the Internet (connected terminal information).

In addition, the terminal SD includes the push receiving unit 31 which establishes a connection by a TCP protocol with the private push gateway Pri-PGW or the public push gateway Pub-PGW, which maintains the connected state, which receives a push message, and which processes the received push message. The processes include a process of supplying necessary information included in a push message to the application downloading unit 33, a connection managing unit 30, and the like.

Furthermore, the terminal SD includes the application downloading unit 33 which acquires URL information of a download destination embedded in the push message from the push receiving unit 31 and which downloads an application from the application server App-ser, the connection managing unit 30 which performs management of various connections, and a VPN connection establishing unit 32 which constructs a VPN with the application server App-ser within the intranet NET1 under an instruction from the connection managing unit 30. The push receiving unit 31, the application downloading unit 33, the connection managing unit 30, and the VPN connection establishing unit 32 in the terminal SD are all realized by installing software in a terminal computer or a smart device.

The connection managing unit 30 stores information such as IP addresses of the private push gateway Pri-PGW and the public push gateway Pub-PGW, a terminal ID (device ID), and push transmission destination information (destination ID) in a database SD-DB, determines to which push gateway the push receiving unit 31 is to be connected in accordance with a network to which a terminal is being connected, and determines whether or not a VPN connection has to be performed for downloading an application.

The connection managing unit 30 determines a network to which a terminal is being connected as follows. When a terminal SD is connected to the Internet NET2 via a mobile telephone network such as 3G, the connection managing unit 30 determines that the terminal SD is being connected to the Internet NET2 and establishes a connection by a TCP protocol to the terminal connection receiving unit 22 of the public push gateway Pub-PGW via the Internet. In addition, when the terminal SD is connected to a wireless LAN by WiFi or the like, the connection managing unit 30 determines that the terminal SD is being connected to the intranet NET1 if identification information (SSID) of an access point of the wireless LAN that is a connection destination is consistent with an access point of the intranet NET1 registered in advance and establishes a connection by a TCP protocol to the terminal connection receiving unit 12 of the private push gateway Pri-PGW. Furthermore, when the SSID of the wireless LAN that is a connection destination is not consistent with the registered access point described above, the connection managing unit 30 determines that a connection is made to the Internet NET2 and establishes a connection by a TCP protocol to the terminal connection receiving unit 22 of the public push gateway Pub-PGW.

Upon downloading an application, the connection managing unit 30 determines that a VPN does not have to be constructed when a connection is being made to the intranet NET1 and determines that a VPN has to be constructed when a connection is being made to the Internet NET2.

When a connection is established by a TCP protocol, the terminal connection receiving units 12 and 22 of the private push gateway Pri-PGW and the public push gateway Pub-PGW and the push receiving unit 31 of the terminal SD enter a state where a socket connection has been completed, and a socket identifier that specifies the socket connection (IP address and port number) is stored in the respective databases Pri-DB, Pub-DB, and SD-DB together with a terminal ID (device) having established the connection.

When the socket connection is established , a connected state is maintained in which both push gateways and the terminal SD are able to transmit and receive data by socket communication. For example, the terminal connection receiving unit 12 of the private push gateway Pri-PGW is in a stand-by state for a request for socket communication and the terminal SD performs a connection request for socket communication. The terminal SD desirably automatically issues the connection request upon start of a power supply or upon connecting to the Internet or an intranet. However, depending on settings, the connection request can also be performed manually by a user.

The state of a socket connection by a TCP protocol is generally maintained as long as connection to a mobile telephone network or a wireless LAN is not interrupted. However, in the case of a mobile telephone network, depending on a carrier, a connected state is cut unless communication is performed within a certain period of time. In such a case, the push receiving unit 31 of the terminal SD periodically communicates with the terminal connection receiving units 12 and 22 to maintain a connected state.

The push receiving unit 31, the VPN connection establishing unit 32, and the application downloading unit 33 in the terminal SD are realized by installing respective applications therefor in the terminal SD. The VPN connection establishing unit 32 performs a process of constructing a virtual private network VPN to the application server App-ser. This can be realized using, for example, the "Android VPN Framework".

The application downloading unit 33 performs a process of downloading an application from the application server App-ser via the constructed VPN.

Furthermore, in addition to a process of establishing and maintaining communication by a TCP protocol described above, the push receiving unit 31 performs a process of establishing a connection with the private push gateway Pri-PGW while the VPN is being constructed. This is because, once a VPN is constructed, the terminal SD is no longer able to perform Internet connection and, during such time, the terminal SD is no longer able to immediately receive a push message when a transmission request for a push message is issued.

### [Data in databases]

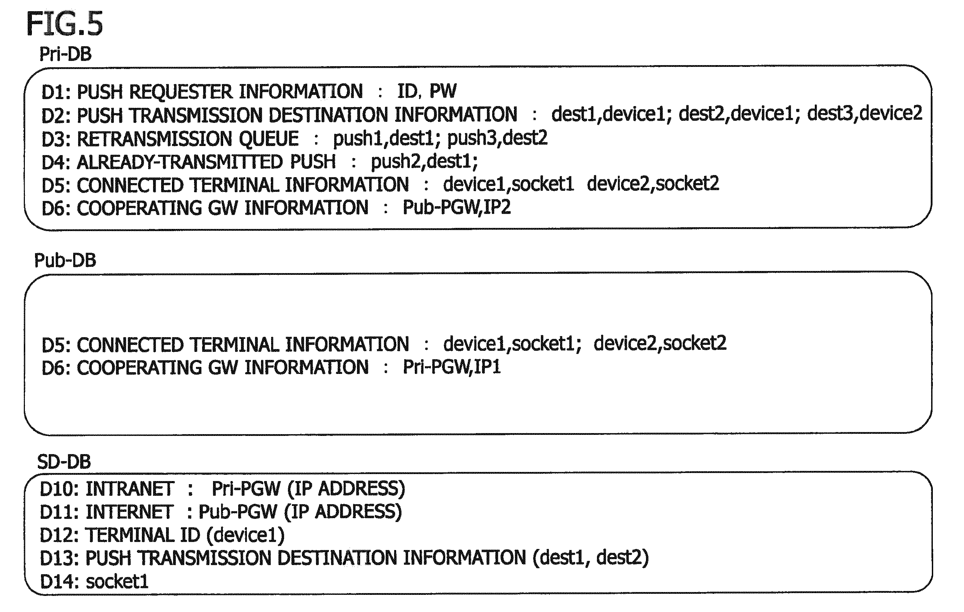

FIG. 5 is a diagram illustrating databases of the push gateways Pri-PGW and Pub-PGW and the terminal SD. The database Pri-DB of the private push gateway Pri-PGW stores push requester information D1, push transmission destination information D2 that is transmission destination information of a push message, a retransmission queue D3, an already-transmitted push D4 including an already-transmitted push message, connected terminal information D5, cooperating gateway information D6 (an IP address of a PGW of a communication partner or the like), and the like. The pieces of data D1, D2, D3, and D4 include secret information or personal information.

The database Pub-DB of the public push gateway Pub-PGW stores connected terminal information D5 and cooperating gateway information D6. These pieces of information D5 and D6 do not include secret information nor private information.

Furthermore, the database SD-DB of the terminal SD stores pieces of information D10 and D11 of respective IP addresses of the private push gateway Pri-PGW associated with an intranet and the public push gateway Pub-PGW associated with the Internet, a terminal ID (device 1) D12, transmission destination information D13 of a push message, and connection information D14 between the terminal and the push gateways Pri-PGW and Pub-PGW.

The push requester information D1 includes identification information P-ID of a push requester terminal and authentication information (password) PW which are necessary when the push requester device Pu-req requests the private push gateway Pri-PGW to transmit a push message. Based on the push requester information D1, the push request receiving unit 11 in the private push gateway Pri-PGW authenticates a transmission request for a push message. The push requester information D1 is registered in advance by default.

The pieces of push transmission destination information D2 and D13 are information on a transmission destination to which a push message is to be transmitted and is information that specifies to which application downloading unit in which terminal the push message is to be transmitted (destination ID: dest1, dest2, dest3, and the like). The information is stored in the database Pri-DB in association with a terminal ID (device ID: device1, device2, and the like). An application of one or a plurality of application downloading units 33 is installed in accordance with a desired application push service in the terminal SD. Therefore, the pieces of transmission destination information D2 and D13 of a push message are desirably information capable of identifying which application downloading unit of which terminal SD.

When the terminal SD only receives a single application push service, the transmission destination information D2 of a push message may be a terminal ID of the terminal SD. However, a terminal ID is information which is used for identifying each terminal SD and which may be easily extracted by a third party. Therefore, when a terminal ID is used as push transmission destination information, there is a risk that undesirable applications may be randomly sent from a malicious third party.

In the example illustrated in FIG. 5, push transmission destination information is given for each application push service for which the terminal SD declares a desire to receive, and all pieces of push transmission destination information D2 are stored in association with a terminal ID in the database Pri-DB of the private push gateway Pri-PGW. According to the example illustrated in FIG. 5, push transmission destination information dest1, dest2 (dest1 device1, and dest2 device1) with respect to a terminal with a terminal ID of device1 and push destination information dest3 (dest3, device2) with respect to a terminal with a terminal ID of device2 are registered.

On the other hand, the database SD-DB of the terminal SD respectively stores device1 as data D12 of the terminal ID and dest1, dest2 as push transmission destination information D13 registered in the terminal.

Unlike a terminal ID, the push transmission destination information is information agreed upon between an application push service and a terminal and has high security. Therefore, a situation where an undesirable application is sent from a malicious third party is avoided.

When the push request receiving unit 11 of the private push gateway Pri-PGW receives a transmission request for a push message and a terminal SD corresponding to the transmission destination information dest1 of the push message is not in a connected state, the retransmission queue D3 stores the push message push2 and the transmission destination information dest1.

The connected terminal information D5 includes correspondence between socket identifiers socket1, socket2 that identify IP addresses and port numbers and terminal IDs (device1, device2) of the respective terminals when the terminal SD establishes a connection by a TCP protocol with respect to the terminal connection receiving units 12 and 22 of the push gateways Pri-PGW and Pub-PGW. In the example illustrated in FIG. 5, device1, socket1 and device2, socket2 are stored as the connected terminal information D5 in the databases Pri-DB and Pub-DB. However, in reality, connected terminal information of a same terminal is never stored in both databases. In addition, in the example illustrated in FIG. 5, socket1 is stored as terminal connection information D14 in the database SD-DB of the terminal.

The cooperating gateway information D6 represents IP addresses of push gateways of respective cooperating partners. In the example illustrated in FIG. 5, IP1 is set to the private push gateway Pri-PGW and IP2 is set to the public push gateway Pub-PGW.

### [Application push operation (1) to terminal within intranet]

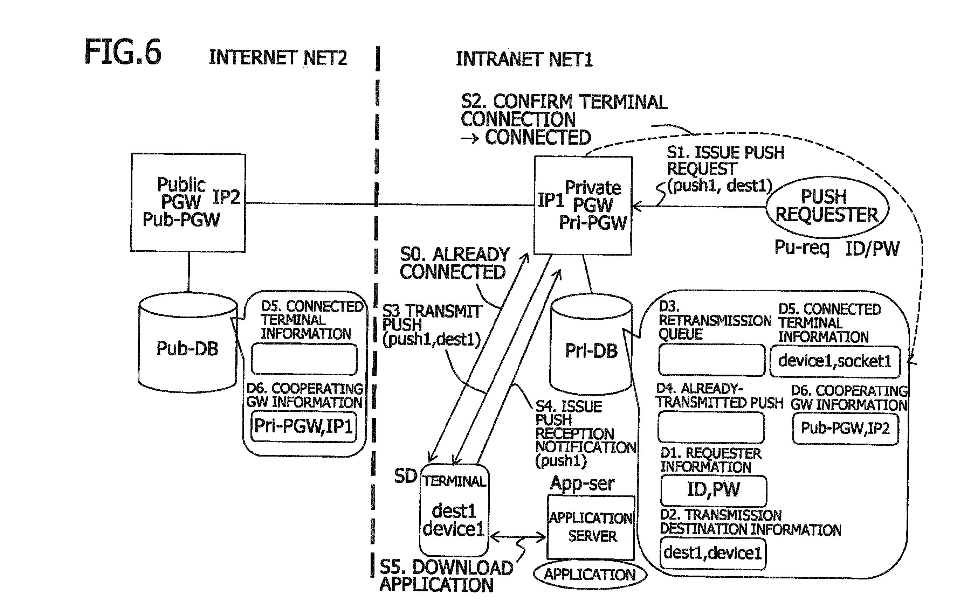

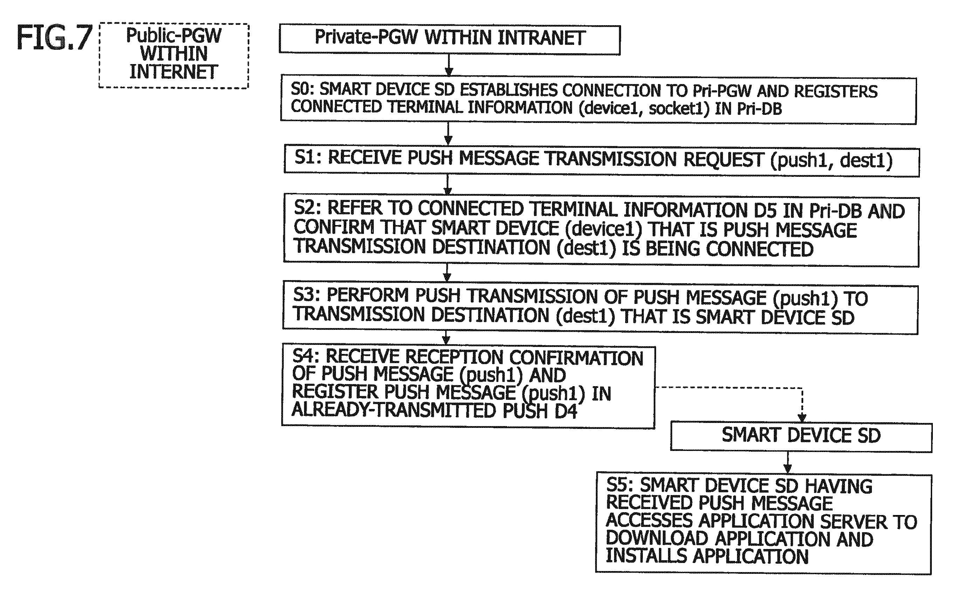

FIG. 6 is a diagram illustrating an application push operation (1) to a terminal within an intranet of the seamless application push system according to the present embodiment. FIG. 7 is a flow chart depicting the application push operation. This example represents an operation when the terminal SD is positioned within the intranet NET1 and establishes a connection by a TCP protocol with the terminal connection receiving unit 12 of the private push gateway Pri-PGW.

Cooperating GW information D6 (Pub-PGW, IP2), push requester information D1 (ID, PW), and push transmission destination information D2 (dest1, device1) are registered to the database Pri-DB of the private push gateway Pri-PGW by an initial setup. In addition, cooperating GW information D6 (Pri-PGW, IP1) is registered to the database Pub-DB of the public push gateway Pub-PGW and push transmission destination information dest1 is registered to the terminal SD.

First, the terminal SD that is a smart device requests a connection by a TCP protocol to the terminal connection receiving unit 12 of the private push gateway Pri-PGW via the intranet NET1 and establishes a connection (S0). Accordingly, connected terminal information D5 (device1, socket1) is registered to the database Pri-DB of the private push gateway Pri-PGW.

Subsequently, the push request receiving unit 11 of the private push gateway Pri-PGW receives a transmission request for an application push message from the push requester device Pu-req (S1). The application push message transmission request includes an application push message push1 and push transmission destination information dest1.

The push request receiving unit 11 refers to push transmission destination information D2 in the database Pri-DB and acquires a terminal ID (device1) corresponding to the push transmission destination information dest1. Furthermore, the terminal connection receiving unit 12 refers to the connected terminal information D5 and confirms that the terminal device1 has already established a connected state (S2). Subsequently, using the socket identifier socket1, the terminal connection receiving unit 12 performs a push transmission of the push message push1 to the terminal SD together with the push transmission destination information dest1 (S3).

In response thereto, at the terminal SD, the push message push1 is transmitted to the push receiving unit 31 according to the socket identifier socket1 and the push message push1 is handed over to a corresponding application downloading unit 33 according to the push transmission destination information dest1. In addition, the push receiving unit 31 of the terminal SD sends back a reception notification of the push message (S4). The terminal connection receiving unit 12 of the private push gateway Pri-PGW receives the reception notification and confirms that push communication has been completed by registering the push message push1 to already-transmitted push D4.

Subsequently, at the terminal SD, the connection managing unit 30 does not construct a VPN with the application server App-ser based on the fact that a connection to the intranet is established and the application downloading unit 33 accesses the application server App-ser based on a URL address in the push message and downloads and executes an application (S5).

As described above, when a terminal can be connected to the intranet NET1, the terminal has established and is maintaining a connected state with the private push gateway Pri-PGW in an initial operation, a push message is delivered to the terminal at a timing where a request for a push message is issued, and an application is automatically downloaded.

### [Application push operation (2) to terminal within intranet]

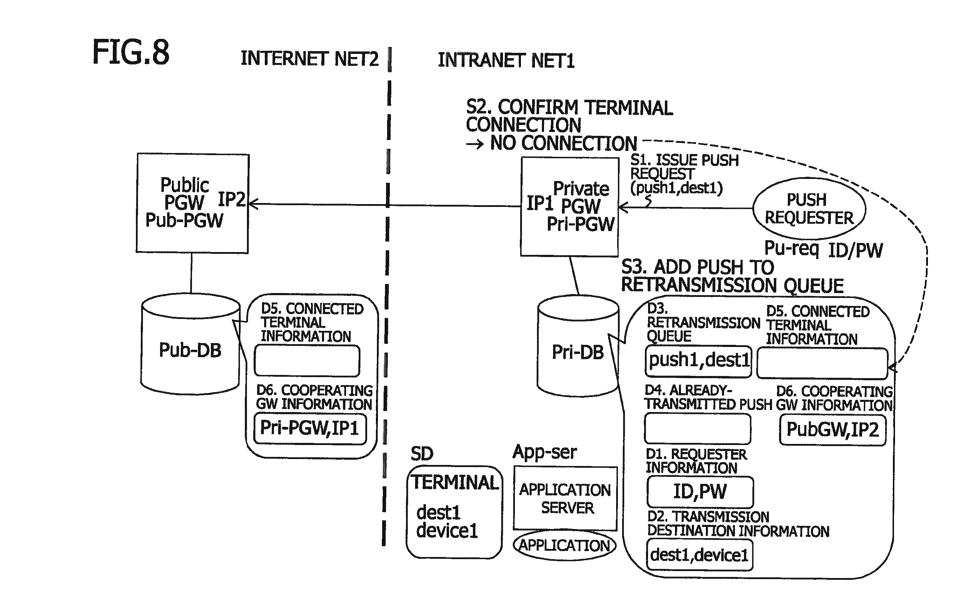

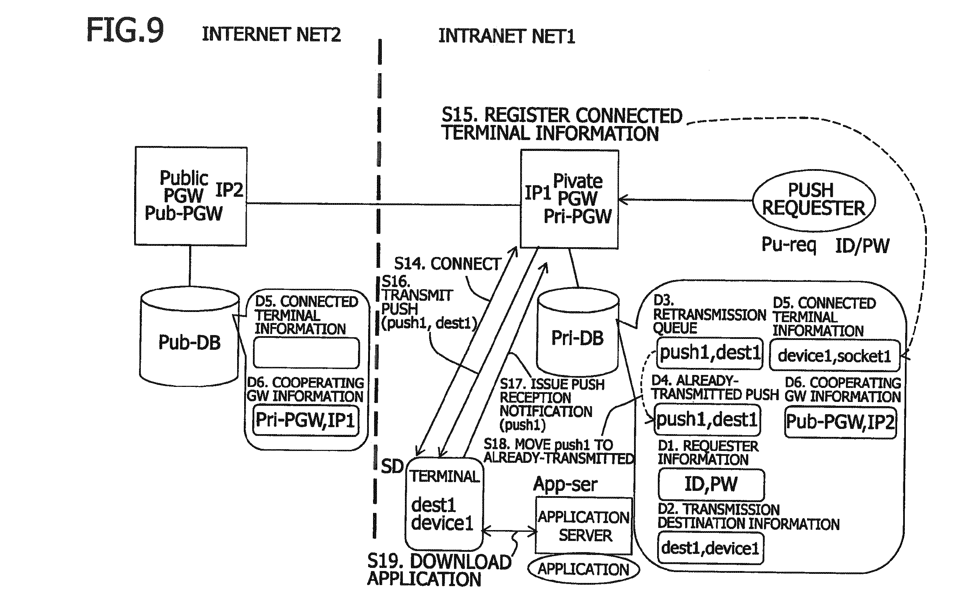

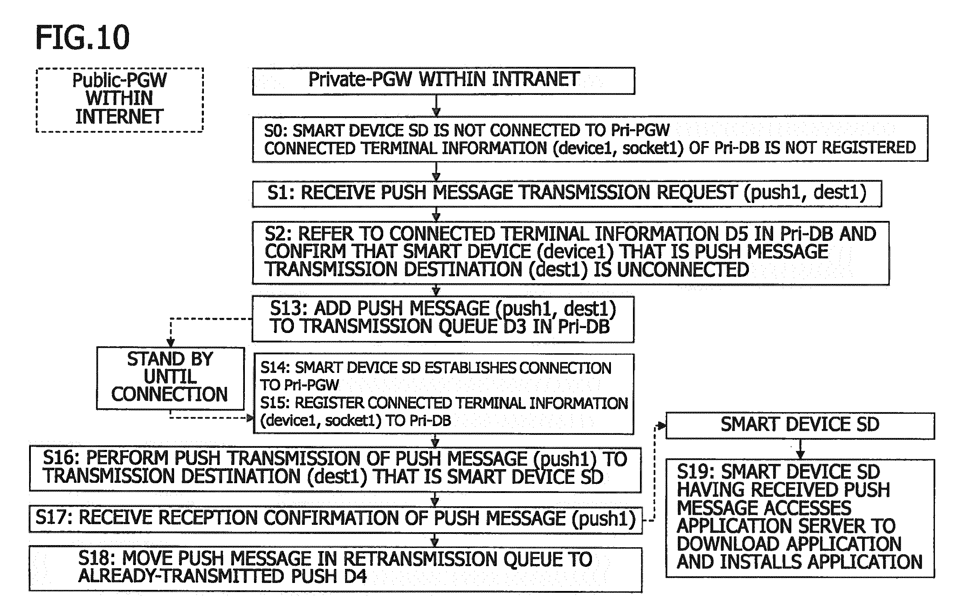

FIGS. 8 and 9 are diagrams illustrating an application push operation (2) to a terminal within an intranet of the seamless application push system according to the present embodiment. FIG. 10 is a flow chart depicting the application push operation. This example represents an operation when the terminal SD is positioned within the intranet NET1 or the terminal SD is not positioned within the intranet and a connection with the terminal connection receiving unit 12 in the private push gateway Pri-PGW has not been established.

In a similar manner to the application push operation (1) to a terminal within an intranet, cooperating GW information D6 (Pub-PGW, IP2), push requester information D1 (ID, PW), and push transmission destination information D2 (dest1, device1) are registered to the database Pri-DB of the private push gateway Pri-PGW by an initial setup. In addition, cooperating GW information D6 (Pri-PGW, IP1) is registered to the database Pub-DB of the public push gateway Pub-PGW and push transmission destination information dest1 is registered to the terminal SD.

In this example, the terminal SD that is a smart device has not established a connection to the private push gateway Pri-PGW and, as a result, the terminal SD is not registered in the connected terminal information D5 of the database Pri-DB (S0).

As illustrated in FIG. 8, the push request receiving unit 11 of the private push gateway Pri-PGW receives a transmission request for an application push message from the push requester device Pu-req (S1). The application push message transmission request includes an application push message push1 and push transmission destination information dest1.

The push request receiving unit 11 refers to push transmission destination information D2 in the database Pri-DB and acquires a terminal ID (device1) corresponding to the push transmission destination information dest1. Furthermore, the terminal connection receiving unit 12 refers to the connected terminal information D5 based on the acquired terminal ID (device1) and confirms that the terminal device1 has not yet established a connected state (S2). Therefore, the push request receiving unit 11 adds a received push message transmission request (push1, dest1) to the retransmission queue D3 (S13).

As illustrated in FIG. 9, eventually, the terminal SD requests a connection by a TCP protocol to the terminal connection receiving unit 12 of the private push gateway Pri-PGW via the intranet NET1 and establishes a connection (S14). Accordingly, the terminal connection receiving unit 12 registers connected terminal information D5 (device1, socket1) to the database Pri-DB of the private push gateway Pri-PGW (S15).

In response thereto, the push request receiving unit 11 refers to the push transmission destination information D2 and extracts push transmission destination information dest1 corresponding to a terminal device1 having established the connection and checks whether or not a push message corresponding to the push transmission destination information dest1 is stored in the retransmission queue D3. In this example, since a push message (push1, dest1) is stored in the retransmission queue, the push request receiving unit 11 performs a push transmission of the push message push1 to the push transmission destination information dest1 using the socket identifier socket1 (S16).

In response thereto, at the terminal SD, the push message push1 is received by the push receiving unit 31 and the push message push1 is handed over to a corresponding application downloading unit 33 according to the push transmission destination information dest1. In addition, the push receiving unit 31 of the terminal SD sends back a reception notification of the push message (S17). The terminal connection receiving unit 12 of the private push gateway Pri-PGW receives the reception notification, confirms that the push communication of the push message push1 has completed, moves the push message push1 in the retransmission queue D3 to the already-transmitted push D4, and deletes the push message push1 from the retransmission queue D3 (S18).

Subsequently, at the terminal SD, the connection managing unit 30 does not construct a VPN with the application server App-ser based on the fact that the terminal SD is connected to the private push gateway Pri-PGW via the intranet and the application downloading unit 33 accesses the application server App-ser based on a URL address in the push message and downloads and executes an application (S19).

As described above, when a terminal can be connected to the intranet NET1, even if the terminal has not established a connected state with the private push gateway Pri-PGW when a transmission request for a push message is issued, a push message is delivered to the terminal at a timing where a connection is subsequently established and an application is automatically downloaded.

### [When terminal SD is within Internet]

Next, operations of the seamless push system in a case where the terminal SD can be connected to the Internet will be described. As briefly described with reference to FIG. 2, in a seamless push system, a public push gateway Pub-PGW is installed on the Internet to enable a private push gateway Pri-PGW within an intranet NET1 and the public push gateway Pub-PGW within the Internet NET2 to cooperate with each other. By installing the public push gateway Pub-PGW on the Internet, a terminal that can be connected to the Internet can establish a connection with the public push gateway Pub-PGW and maintain the connected state.

Furthermore, due to the cooperation by the private push gateway Pri-PGW and the public push gateway Pub-PGW, secret information and personal information are stored in the database Pri-DB of the private push gateway Pri-PGW while such information is not stored in the database Pub-DB of the public push gateway Pub-PGW.

In addition, by exchanging commands described below between the two push gateways, a push message can be reliably transferred from the private push gateway Pri-PGW to the public push gateway Pub-PGW in a timely manner and a push message can be sent to a terminal SD on the Internet.

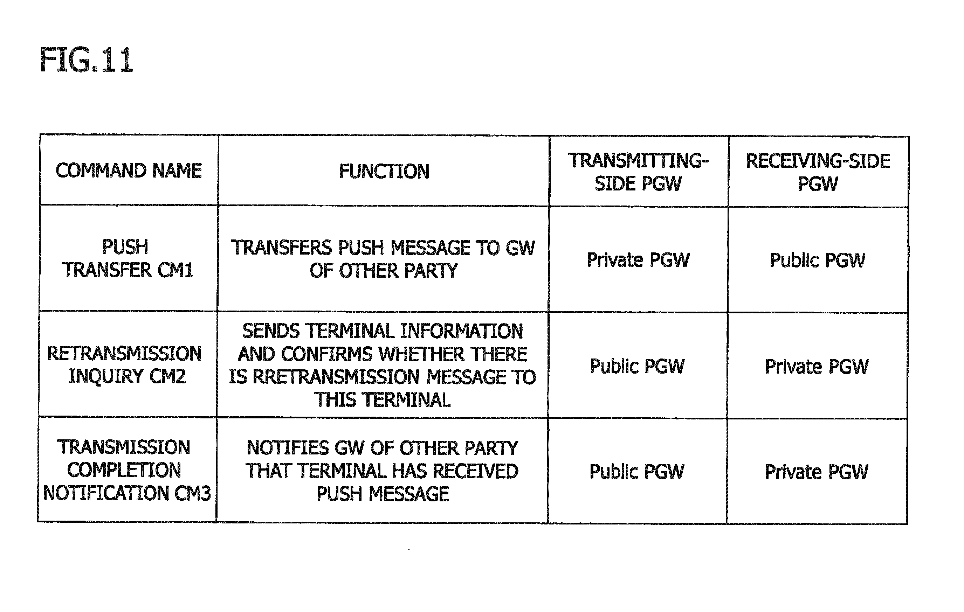

FIG. 11 is a diagram illustrating commands that are exchanged between the two push gateways. FIG. 11 presents three commands, functions of the commands, and a transmitting-side PGW and a receiving-side PGW of the commands. These commands are exchanged between a GW cooperating unit 10 in the private push gateway Pri-PGW and a GW cooperating unit 20 in the public push gateway Pub-PGW illustrated in FIG. 4.

A push transfer command CM1 is a command that is transmitted to the public push gateway Pub-PGW when the private push gateway Pri-PGW receives a push message transmission request and when retransmitting a push message placed in an awaiting retransmission queue. A push message (push), push transmission destination information (dest), and a terminal ID (device) are attached to the command. In response to receiving the push message transfer command CM1, the public push gateway Pub-PGW checks whether or not the terminal ID (device) has established a connection, and when a connection has been established, the public push gateway Pub-PGW transmits the push message (push1) to the destination of push transmission destination information (dest) based on socket information (socket) corresponding to the terminal ID.

A retransmission inquiry command CM2 is a command which, when a terminal establishes a connection with the public push gateway Pub-PGW, causes the public push gateway Pub-PGW to make an inquiry to the private push gateway Pri-PGW as to whether or not a push message for the terminal is stored in a retransmission queue, and if so, requests transfer of the push message. If the push message is stored in the retransmission queue, the private push gateway Pri-PGW transfers the push message to the public push gateway Pub-PGW according to the push transfer command CM1 described above.

A transmission completion notification command CM3 is a command that is transmitted from the public push gateway Pub-PGW to the private push gateway Pri-PGW when the public push gateway Pub-PGW transmits a push message to a terminal in a connected state in response to a push transfer command CM1 and receives a push reception notification from the terminal. In response to the transmission completion notification command CM3, the private push gateway Pri-PGW moves the push message stored in the retransmission queue D3 to already-transmitted push D4 and deletes the push message from the retransmission queue D3.

Hereinafter, operations of an application push when a terminal is positioned within the Internet will be described with respect to a case where a connection has been established with the public push gateway Pub-PGW and to a case where the connection has not yet been established.

### [Application push operation (1) to terminal within Internet]

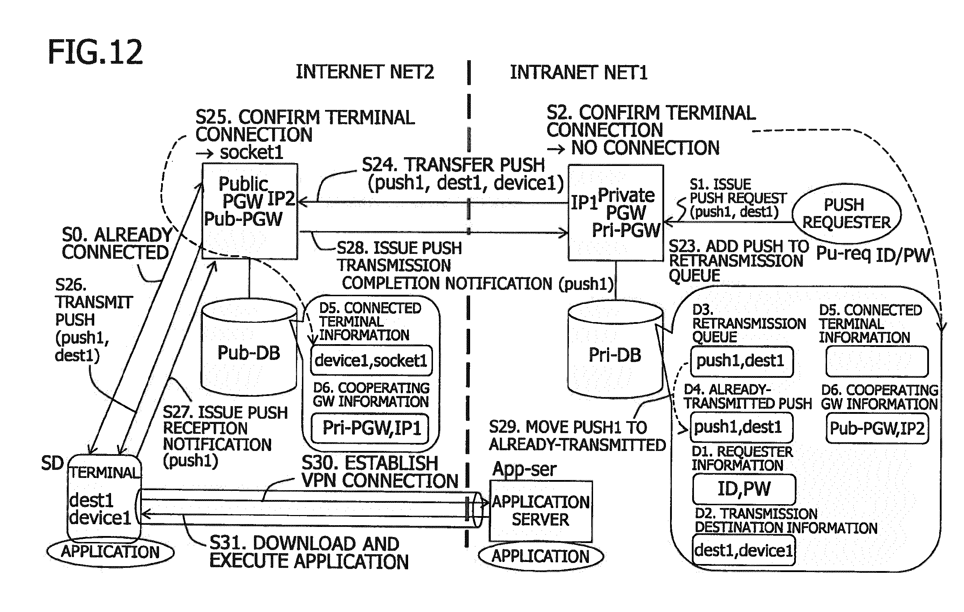

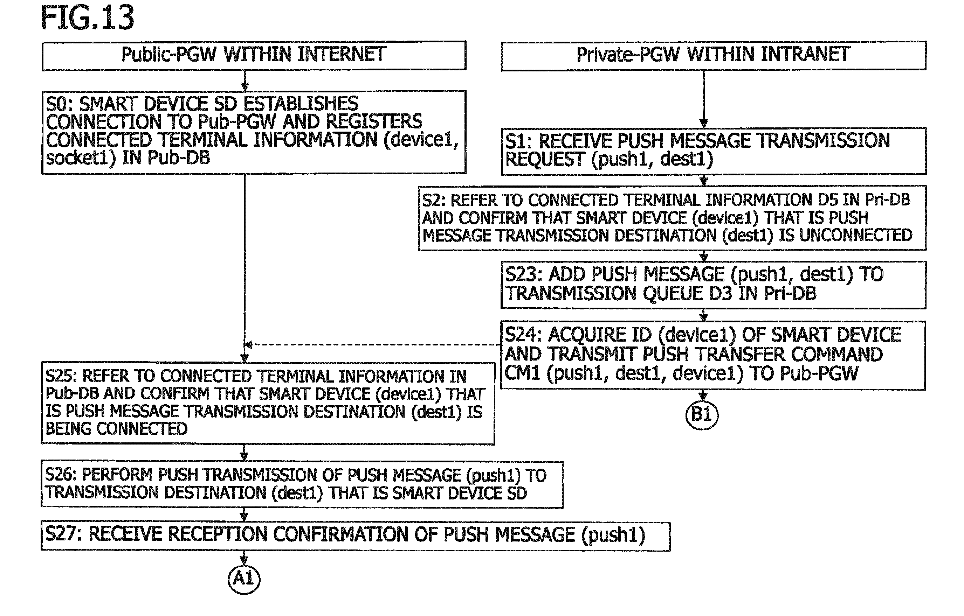

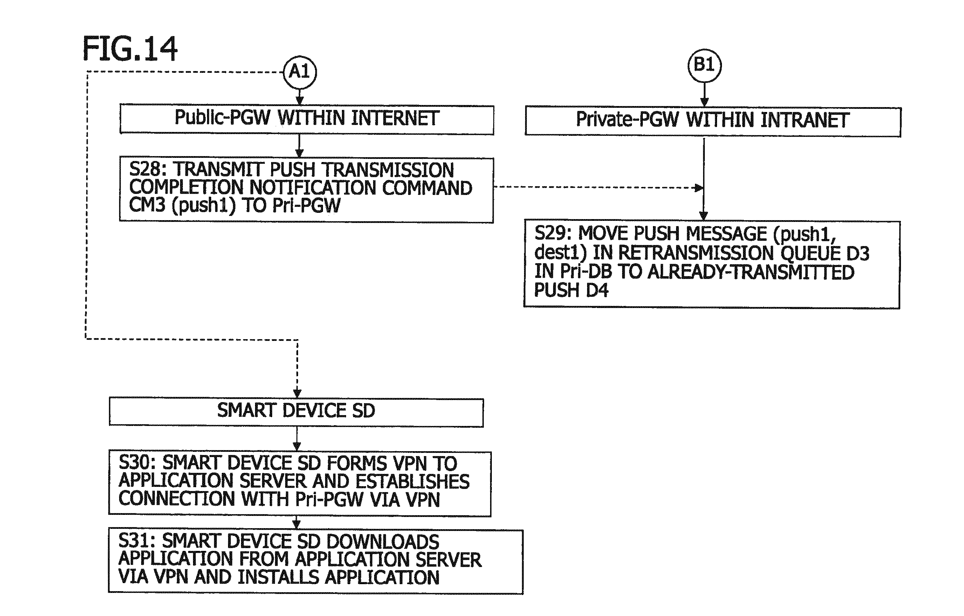

FIG. 12 is a diagram illustrating an application push operation (1) to a terminal within the Internet of the seamless application push system according to the present embodiment. FIGS. 13 and 14 are flow charts depicting the application push operation. The application push operation (1) is an operation in a case where a terminal has already established a connection with the terminal connection receiving unit 22 of the public push gateway Pub-PGW. Moreover, initial settings are similar to those of the application push operations (1) and (2) to a terminal within an intranet.

First, a terminal SD that is a smart device is in a state where the terminal SD can be connected to the Internet, the terminal SD has established a connection by a TCP protocol to the terminal connection receiving unit 22 in the public push gateway Pub-PGW, and a device ID (device1) and socket information (socket1) of the terminal SD are registered in connected terminal information D5 in the database Pub-DB of the public push gateway Pub-PGW.

In this state, in a similar manner to FIG. 8, the push request receiving unit 11 of the private push gateway Pri-PGW receives a transmission request for an application push message from the push requester device Pu-req (S1). The application push message transmission request includes an application push message push1 and push transmission destination information dest1.

The push request receiving unit 11 refers to push transmission destination information D2 in the database Pri-DB and acquires a terminal ID (device1) corresponding to the push transmission destination information dest1. Furthermore, the terminal connection receiving unit 12 refers to the connected terminal information D5 based on the acquired terminal ID (device1) and confirms that the terminal device1 has not yet established a connected state in an intranet (S2). Therefore, the push request receiving unit 11 additionally registers a received push message transmission request (push1, dest1) to the retransmission queue D3 (S23).

At the same time, the gateway cooperating unit 10 refers to push transmission destination information D2, extracts a terminal ID (device1) corresponding to push transmission destination information dest1 in the push message transmission request, and transmits a push transfer command CM1 to the gateway cooperating unit 20 in the public push gateway Pub-PGW (S24). The push transfer command CM1 includes a push message push1, push transmission destination information dest1, and a terminal ID (device1). At this point, only a confirmation that the terminal SD has not established a connected state with the private push gateway Pri-PGW within the intranet can be made, and since there is a possibility that the terminal SD has established a connected state within the Internet, the push transfer command CM1 is transmitted to the public push gateway Pub-PGW.

In response to the push transfer command CM1, a terminal connection receiving unit 22 in the public push gateway Pub-PGW refers to the connected terminal information D5 in the database Pub-DB and confirms whether or not a terminal (device1) that is a push message transmission destination (dest1) is being connected (S25). In this example, the terminal SD has already established a connection in step S0 and is maintaining the connection.

Therefore, the terminal connection receiving unit 22 of the public push gateway Pub-PGW transmits by push transmission the push message (push1) transferred together with the push transfer command CM1 to the destination of push transmission destination information (dest1) according to the socket information (socket1) in the connected terminal information D5 (S26). In response thereto, the terminal SD sends back a push reception notification (push1) to the terminal connection receiving unit 22 as an acknowledgement of receiving the push message (S27).

In response to the push reception notification, the gateway cooperating unit 20 of the public push gateway Pub-PGW transmits a transmission completion notification command CM3 to the gateway cooperating unit 10 of the private push gateway Pri-PGW (S28). The transmission completion notification command includes information specifying a push message push1.

In response to the transmission completion notification command CM3, the push message request receiving unit 11 of the private push gateway Pri-PGW moves a push message (push1) in a retransmission queue D3 in the database Pri-DB to already-transmitted push D4 (S29). Accordingly, a situation where the push message is transmitted twice by mistake can be avoided.

In addition, at the terminal SD, in response to the transmission S26 of the push message described above, the push receiving unit 31 transfers the push message (push1) to an application downloading unit 33 corresponding to the push transmission destination information (dest1). Furthermore, the connection managing unit 30 detects that the current terminal SD is connected to the Internet, refers to a URL included in the push message (push1), and causes the VPN connection establishing unit 32 to establish a virtual private network VPN to the application server App-ser within the intranet NET1 (S30). Moreover, the connection managing unit 30 establishes a connection by a TCP protocol to the terminal connection receiving unit 12 of the private push gateway Pri-PGW within the intranet NET1 via the VPN (S30). Accordingly, the terminal SD is now capable of receiving a push message even when an application is being downloaded from the application server App-ser via the VPN.

In addition, the application downloading unit 33 of the terminal SD downloads an application corresponding to the URL in the push message from the application server App-ser via the VPN and executes the application (S31).

As described above, by installing the public push gateway Pub-PGW within the Internet, a terminal SD that can be connected to the Internet can establish and maintain a connected state to the public push gateway Pub-PGW. Therefore, the terminal can download an application at a timing of receiving a transmission request for a push message.

In addition, the terminal having established a connection is registered only by a terminal ID (device1) thereof in the database Pub-DB of the public push gateway Pub-PGW within the Internet, and personal information or private information such as the push message (push1) and the push transmission destination information (dest1) is not registered in the database Pub-DB. Therefore, there is a low risk of leaking of such personal information and secret information from the database Pub-DB of the database Pub-PGW within the Internet.

On the other hand, when the terminal SD downloads an application, since the terminal SD downloads the application by establishing a VPN to the application server App-ser within the intranet NET1, the application can be stored in a server within the Intranet. Furthermore, since the terminal SD establishes a connection with the terminal connection receiving unit 12 in the private push gateway Pri-PGW via the VPN during downloading, the terminal SD can receive a push message even during downloading.

### [Application push operation (2) to terminal within Internet]

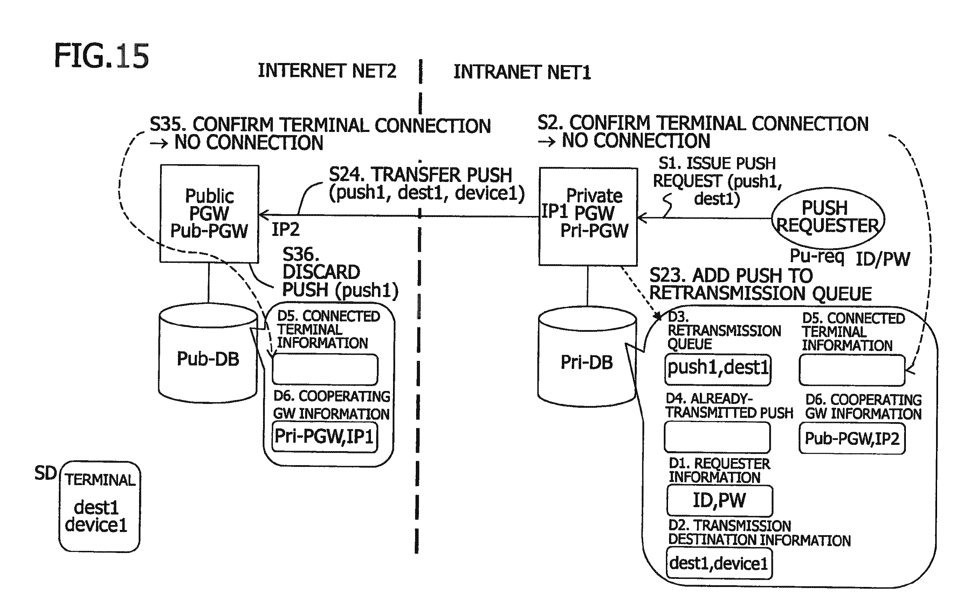

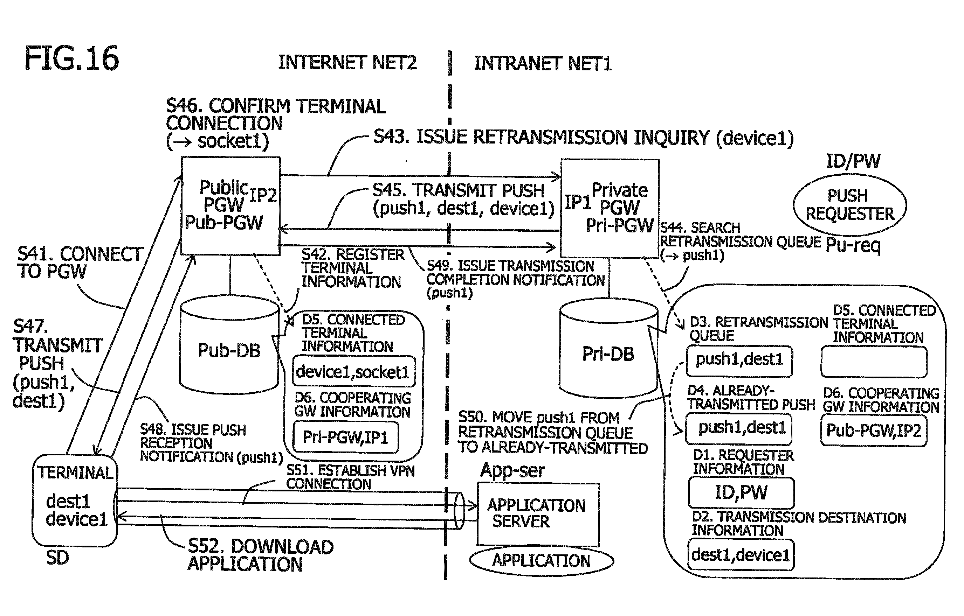

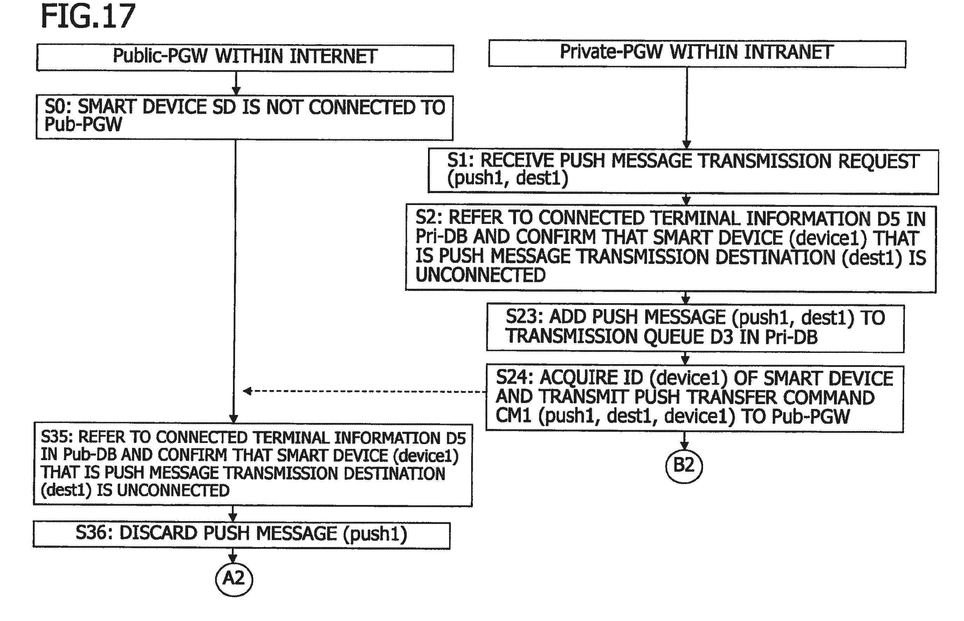

FIGS. 15 and 16 are diagrams illustrating an application push operation (2) to a terminal within the Internet of the seamless application push system according to the present embodiment. FIGS. 17, 18, and 19 are flow charts depicting the application push operation. The application push operation (2) is an operation in a case where a terminal has not initially established a connected state with the terminal connection receiving unit 22 of the public push gateway Pub-PGW but subsequently establishes a connected state. Moreover, default settings are similar to those of the application push operations (1) and (2) to a terminal within an intranet.

As illustrated in FIGS. 15 and 17, first, a terminal SD that is a smart device has not yet established a connected state with the public push gateway Pub-PGW within the Internet NET2 (S0). In addition, steps from step (S1) in which the push request receiving unit 11 of the private push gateway Pri-PGW receives a push message transmission request from the push requester device Pu-req to step (S24) in which the gateway cooperating unit 10 in the private push gateway Pri-PGW transmits a push transfer command CM1 to the gateway cooperating unit 20 of the public push gateway Pub-PGW are similar to the steps of the application push operation (1) to a terminal within the Internet.

At the public push gateway Pub-PGW, in response to the push transfer command CM1, the terminal connection receiving unit 12 refers to connected terminal information D5 in the database Pub-DB, checks whether or not a terminal ID (device1) attached to the push transfer command CM1 has already established a connection, and confirms that the terminal ID (device1) is unconnected (S35). Accordingly, the gateway cooperating unit 20 of the public push gateway Pub-PGW discards the push message push1 and the push transmission destination dest1 attached to the push transfer command CM1. In other words, these pieces of information that include personal information and secret information are not stored in the database Pub-DB.

Moreover, the terminal ID (device1) attached to the push transfer command CM1 may be discarded or stored in the database Pub-DB as a terminal ID notified by the push transfer command.

Next, as illustrated in FIGS. 16, 18, and 19, a terminal SD that is a smart device establishes a connection by a TCP protocol to the terminal connection receiving unit 22 of the public push gateway Pub-PGW via the Internet (S41). Due to the establishment of the connection, the terminal connection receiving unit 22 registers a device ID (device1) and socket information (socket1) as connected terminal information to the connected terminal information D5 in the database Pub-DB (S42). In addition, the gateway cooperating unit 20 of the public push gateway Pub-PGW transmits a retransmission inquiry command CM2 to the gateway cooperating unit 10 of the private push gateway Pri-PGW (S43). The terminal ID (device1) having established a connected state in steps S41 and S42 is attached to the command CM2.

In response thereto, the push request receiving unit 11 in the private push gateway Pri-PGW extracts push transmission destination information (dest1) corresponding to the terminal ID (device1) attached to the retransmission inquiry command CM2 from the push transmission destination information D2 in the database Pri-DB, searches in a retransmission queue D3 in the database Pri-DB based on the push transmission destination information (dest1), and detects push message information (push1, dest1) awaiting retransmission (S44).

In response thereto, the gateway cooperating unit 10 of the private push gateway Pri-PGW attaches the detected push message push1, the push transmission destination information dest1, and the terminal ID (device1) to the push transfer command CM1 and transmits the push transfer command CM1 to the gateway cooperating unit 20 of the public push gateway Pub-PGW (S45).

Subsequent operations are similar to operations after step S25 in the application push operation (1) to a terminal within the Internet.

Specifically, in response to the push transfer command CM1, a terminal connection receiving unit 22 in the public push gateway Pub-PGW refers to the connected terminal information D5 in the database Pub-DB and confirms whether or not a terminal (device1) that is a push message transmission destination (dest1) is being connected (S46). In this case, the terminal SD has already established a connection in step S41 and maintains the connection.

Therefore, the terminal connecting unit 22 of the public push gateway Pub-PGW performs a push transmission of the push message (push1) having been transferred to the terminal connection receiving unit 22 together with the push transfer command CM1 to the push transmission destination information (dest1) according to the socket information (socket1) in the connected terminal information D5 (S47). In response thereto, the terminal SD sends back a push reception notification (push1) to the terminal connecting unit 22 as an acknowledgement of receiving a push message (S48).

In response to the push reception notification, the gateway cooperating unit 20 of the public push gateway Pub-PGW attaches information (push1) that specifies a push message to a transmission completion notification command CM3 and transmits the transmission completion notification command CM3 to the gateway cooperating unit 10 of the private push gateway Pri-PGW (S49).

In response to the transmission completion notification command CM3, the push request receiving unit 11 of the private push gateway Pri-PGW moves a push message (push1) in a retransmission queue D3 in the database Pri-DB to already-transmitted push D4 (S50). Accordingly, a situation where the push message is transmitted twice by mistake can be avoided.

In addition, at the terminal SD, in response to the transmission S47 of the push message described above, the push receiving unit 31 transfers the push message (push1) to an application downloading unit 33 corresponding to the push transmission destination information (dest1). Furthermore, the connection managing unit 30 detects that the current terminal SD is connected to the Internet, refers to a URL included in the push message (push1), and causes the VPN connection establishing unit 32 to establish a virtual private network VPN to the application server App-ser within the intranet NET1 (S51). Moreover, the connection managing unit 30 establishes a connection by a TCP protocol to the terminal connection receiving unit 12 of the private push gateway Pri-PGW within the intranet NET1 via the VPN (S51). Accordingly, the terminal SD is now capable of receiving a push message even while an application is being downloaded from the application server App-ser via the VPN.

In addition, the application downloading unit 33 of the terminal SD downloads an application corresponding to the URL in the push message from the application server App-ser via the VPN and executes the application (S52).

As described above, a push transmission of a push message in a retransmission queue is performed to a terminal at a timing where the terminal establishes a connection with the public push gateway Pub-PGW via the Internet, and an application is downloaded to the terminal.

In addition, upon receiving a push transfer command CM1 when a first push message transmission request is issued, the public push gateway Pub-PGW detects that the terminal is unconnected and discards the transferred push message push1 and push transmission destination information dest1. Accordingly, personal information and secret information are not stored in the public push gateway Pub-PGW and security can be kept at a high level.

The public push gateway Pub-PGW may store a terminal ID (device1) when the terminal is unconnected upon receiving a first push transfer command CM1. In this case, when the terminal SD subsequently establishes a connection to the public push gateway Pub-PGW, the terminal SD can be collated with the terminal ID to confirm that the terminal SD is a terminal of a push message awaiting retransmission. However, since the public push gateway Pub-PGW does not store a push message, a retransmission request command for requesting retransmission has to be transmitted to the private push gateway Pri-PGW in place of the retransmission inquiry command CM2.

In the embodiment described above, when the terminal SD is able to receive only one push message, since push transmission destination information dest is information indicating which downloading unit (downloader application) of which terminals is to be used, a terminal ID can be used as the push transmission destination information. However, since the terminal ID is information that can be acquired from the terminal SD, it is anticipated that the application push messages are to be randomly transmitted to the terminal by a third party.

Therefore, for each application push service, the private push gateway Pri-PGW favorably issues push transmission destination information dest separately from a terminal ID and registers the push transmission destination information dest to the terminal SD and the private push gateway Pri-PGW. By storing the push transmission destination information dest in the private push gateway Pri-PGW but not in the public push gateway Pub-PGW, a situation where application push messages are randomly transmitted to the terminal by a third party can be eliminated. However, to enable the public push gateway Pub-PGW to confirm whether or not a transmission destination terminal has established a connection, a terminal ID (device) is attached to the push transfer command CM1 in addition to a push message push and push transmission destination information dest.

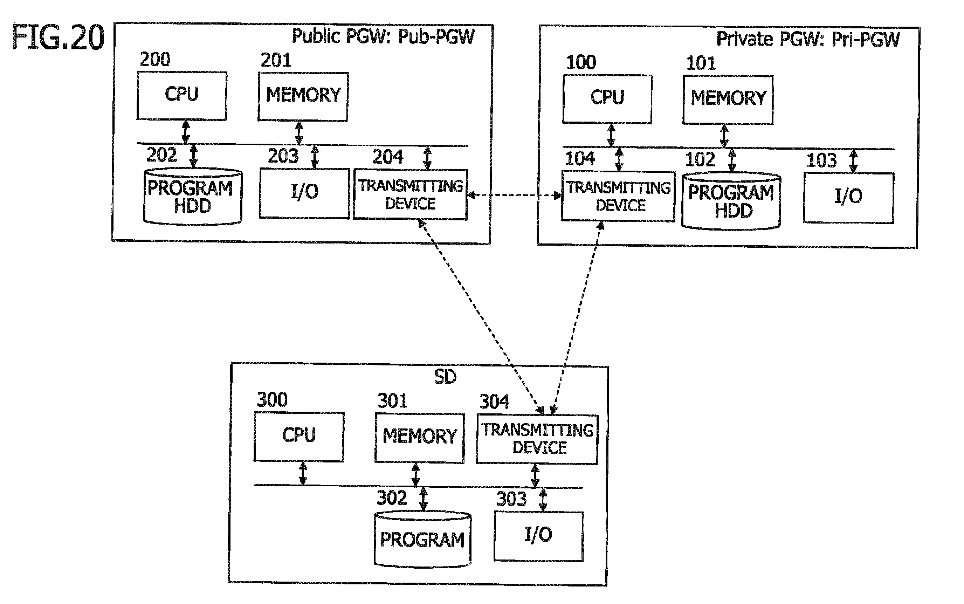

FIG. 20 is a diagram illustrating hardware configurations of the private push gateway Pri-PGW, the public push gateway Pub-PGW, and the terminal SD illustrated in FIG. 4. The private push gateway Pri-PGW includes a CPU 100 that is a processor, a memory 101, a storage medium 102 storing a program, an input/output device 103, and a communication device 104. As described above, the push request receiving unit 11, the terminal connection receiving unit 12, and the gateway cooperating unit 10 in the private push gateway Pri-PGW illustrated in FIG. 4 are realized as the processor 100 executes a program in the storage medium 102.

The public push gateway Pub-PGW includes a CPU 200 that is a processor, a memory 201, a storage medium 202 storing a program, an input/output device 203, and a communication device 204. As described above, the terminal connection receiving unit 22 and the gateway cooperating unit 20 in the public push gateway Pub-PGW illustrated in FIG. 4 are realized as the processor 200 executes a program in the storage medium 202.

The terminal SD includes a CPU 300 that is a processor, a memory 301, a storage medium 302 storing a program, an input/output device 303, and a communication device 304. As described above, the push receiving unit 31, the connection managing unit 30, the application downloading unit 33, and the VPN connection establishing unit 32 in the terminal SD illustrated in FIG. 4 are realized as the processor 300 executes a program in the storage medium 302.

### [Second embodiment]

In the first embodiment, duplex communication of the three commands illustrated in FIG. 11 is performed between the gateway cooperating unit 10 of the private push gateway Pri-PGW and the gateway cooperating unit 20 of the public push gateway Pub-PGW. Among the three commands, the retransmission inquiry command CM2 and the transmission completion notification command CM3 are transmitted by the public push gateway Pub-PGW to the private push gateway Pri-PGW.

On the other hand, companies, public offices, and the like provide a gateway between an intranet and the Internet and cuts off communication from the Internet to the intranet with a firewall in the gateway to protect the intranet from attacks that originate from the Internet.

Accordingly, in order to adapt seamless push to a firewall such as that described above, the communication from the Internet to the intranet, in other words, the communication from the public push gateway Pub-PGW to the private push gateway Pri-PGW in the example illustrated in FIG. 4 has to be prevented from taking place.

In the second embodiment, a connection from the private push gateway Pri-PGW to the public push gateway Pub-PGW is established to enable data transmission from the public push gateway Pub-PGW on the Internet to the private push gateway Pri-PGW within an intranet. This can be realized by having the public push gateway Pub-PGW perform long polling on the connection or by using WebSocket that is a standard for duplex communication between a web server and a web browser. In this case, long polling refers to a technique in which a server (requested side, Pub-PGW) withholds a responding to a communication request made by a client (requesting side, Pri-PGW), but periodically transmits null data to the client to prevent the connection from closing. When data is to be transmitted from the server to the client, the server transmits the data to the client using the maintained connection.

With HTTP that is a protocol used for communication between gateways, generally, communication is started when a client accesses a server and ends when the server responds to the client. In addition, communication originating from the server is disabled. With long polling, while communication similarly starts when a client accesses a server, since the server subsequently maintains connection by periodically transmitting null data to the client, communication originating from the server is substantially enabled.

Long polling can be realized by a method using a technique known as comet or a method in which a server periodically transmits KeepAlive by HTTP communication. In addition, with Java (Java is a registered trademark) used in server buildup, since the CometProcessor class of Apache Tomcat is provided as an application program interface (API) adapted to long polling, a server accommodating long polling can be built using CometProcessor.

In the second embodiment, by adapting the private push gateway Pri-PGW and the public push gateway Pub-PGW to long polling or WebSocket, duplex communication of the three commands illustrated in FIG. 11 can be performed via a firewall of a gateway. Moreover, in the following embodiment, an example will be described in which duplex communication between the private push gateway Pri-PGW and the public push gateway Pub-PGW is performed by long polling.

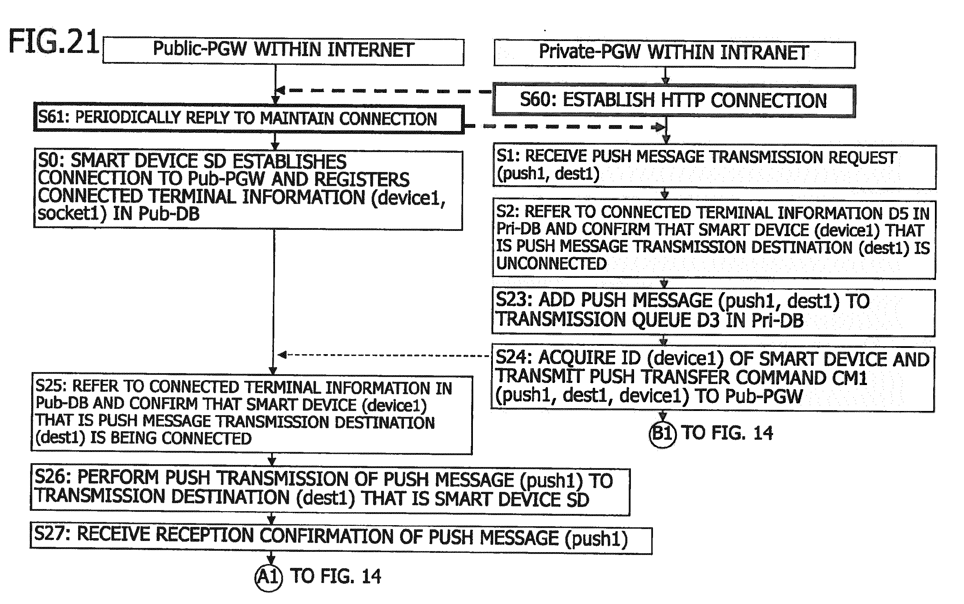

FIG. 21 is a diagram illustrating an application push operation (1) to a terminal within the Internet according to the second embodiment. For the first embodiment, an application push operation (1) to a terminal within the Internet has been presented in FIGS. 13 and 14. In contrast, for the second embodiment, processes are performed by the private push gateway Pri-PGW and the public push gateway Pub-PGW according to a flow chart illustrated in FIG. 21 instead of FIG. 13. Therefore, flow charts illustrating an application push operation (1) to a terminal within the Internet according to the second embodiment are FIGS. 21 and 14.

In FIG. 21, as depicted with bold frames, processes that differ from the first embodiment illustrated in FIG. 13 are a process (S60) in which the gateway cooperating unit 10 of the private push gateway Pri-PGW transmits an HTTP request to the gateway cooperating unit 20 of the public push gateway Pub-PGW to establish an HTTP connection and a process (S61) in which, in response thereto, the gateway cooperating unit 20 of the public push gateway Pub-PGW periodically replies to the HTTP request to maintain the HTTP connection.

The process S60 for establishing an HTTP connection and the process S61 for maintaining the connection by periodic replies are desirably performed when, for example, power supplies of both push gateways are started. Accordingly, a state where the HTTP connection is constantly maintained is created between the push gateways. As a result, a retransmission inquiry command CM2 and a transmission completion notification command CM3 from the public push gateway Pub-PGW to the private push gateway Pri-PGW can be transmitted at arbitrary timings without opposing a blocking function of the firewall.

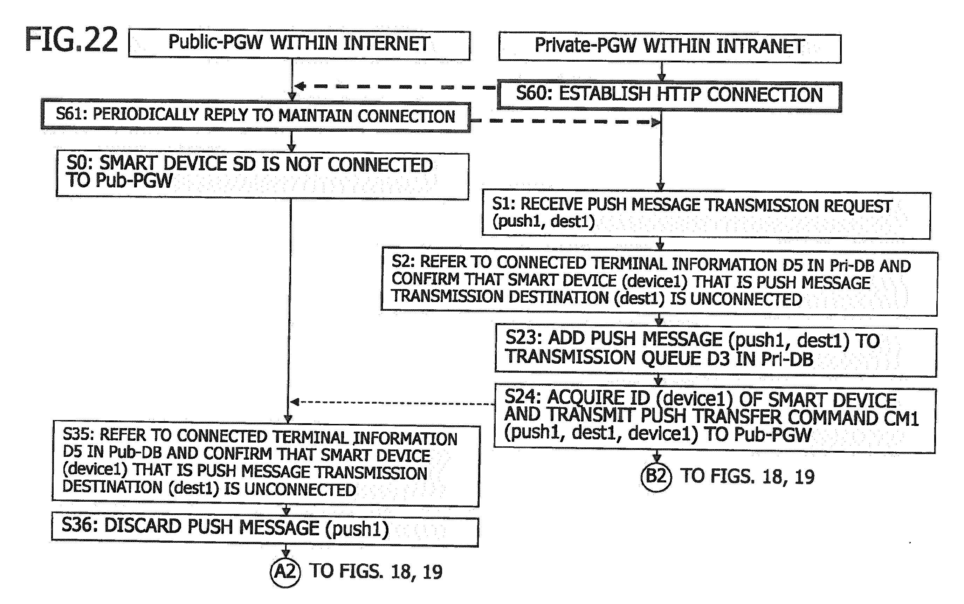

FIG. 22 is a diagram illustrating an application push operation (2) to a terminal within the Internet according to the second embodiment. For the first embodiment, an application push operation (2) to a terminal within the Internet has been presented in FIGS. 17, 18, and 19. In contrast, for the second embodiment, processes are performed by the private push gateway Pri-PGW and the public push gateway Pub-PGW according to a flow chart illustrated in FIG. 22 instead of FIG. 17. Therefore, flow charts illustrating an application push operation (2) to a terminal within the Internet according to the second embodiment are FIGS. 22, 18, and 19.

In FIG. 22, as depicted with bold frames, processes that differ from the first embodiment illustrated in FIG. 17 are a process (S60) in which the gateway cooperating unit 10 of the private push gateway Pri-PGW transmits an HTTP request to the gateway cooperating unit 20 of the public push gateway Pub-PGW to establish an HTTP connection and a process (S61) in which, in response thereto, the gateway cooperating unit 20 of the public push gateway Pub-PGW periodically replies to the HTTP request to maintain the HTTP connection. The process S60 for establishing an HTTP connection and the process S61 for maintaining the connection by periodic replies are desirably performed when, for example, power supplies of both push gateways are started.

### [Third embodiment]

In a third embodiment, communication from the public push gateway Pub-PGW is performed by a response to a request from the private push gateway Pri-PGW. Therefore, in the third command, commands between the private push gateway Pri-PGW and the public push gateway Pub-PGW are changed from the commands illustrated in FIG. 11. In a command system according to the third embodiment, all commands are transmitted, originated from the private push gateway Pri-PGW, to the public push gateway Pub-PGW, and based on responses to the commands, data transmission from the public push gateway Pub-PGW to the private push gateway Pri-PGW is performed. Accordingly, data transmission from the public push gateway Pub-PGW on the Internet to the private push gateway Pri-PGW within an intranet is enabled.

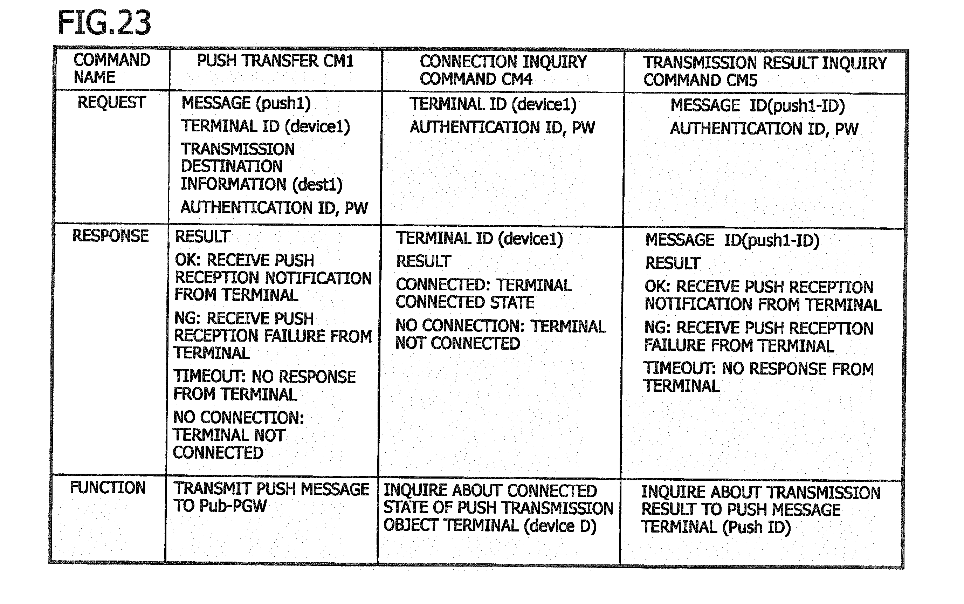

FIG. 23 is a diagram showing the command system according to the third embodiment. The commands include a push transfer command CM1, a connection inquiry command CM4, and a transmission result inquiry command CM5. The push transfer command CM1 is a command for transferring a push message from the private push gateway Pri-PGW to the public push gateway Pub-PGW. In a similar manner to the push transfer command CM1 illustrated in FIG. 11, the push transfer command CM1 includes a message (for example, push1), a transmission destination terminal ID (for example, device1), transmission destination information (for example, dest1), and an authentication ID and a password PW for the public push gateway Pub-PGW.

In addition, a response from the public push gateway Pub-PGW to the push transfer command CM1 includes a result of an attempt to transmit the transferred push message to the transmission destination terminal.
Transmission results include the following.
OK: As a result of transmitting a push message, reception of a push message is notified from the terminal.
NG: As a result of transmitting a push message, a failure occurred in reception from the terminal.
TIMEOUT: A push message was transmitted but the terminal did not respond within a prescribed period of time.
No connection: The terminal to transmit a push message was not in a connected state.

The connection inquiry command CM4 is a command for inquiring a connected state with a terminal that is a push transmission object, transmitting from the private push gateway Pri-PGW to the public push gateway Pub-PGW, when a response to the push transfer command CM1 is "no connection" indicating that a connection between the public push gateway Pub-PGW and the terminal has not been established. The connection inquiry command CM4 includes a terminal ID (for example, device1), an authentication ID, and a password PW. In addition, responses include "connected" and "no connection". When the response is "connected", the private push gateway Pri-PGW once again transmits the push transfer command CM1.

The transmission result inquiry command CM5 is a command for once again requesting a result with respect to the push transfer command CM1, transmitting from the private push gateway Pri-PGW to the public push gateway Pub-PGW, when the response to the push transfer command CM1 is "TIMEOUT" indicating that there is no response from the terminal. The transmission result inquiry command CM5 includes a push message ID (for example, push1-ID), an authentication ID, and a password PW. Responses to this command include "OK", "NG", and "TIMEOUT" among the responses to the push transfer command CM1. When the response is "TIMEOUT", either the transmission result inquiry command CM5 is transmitted once again or the push transfer command CM1 is transmitted. The push transfer command CM1 may be transmitted once more when the "TIMEOUT" response is received a prescribed number of times.

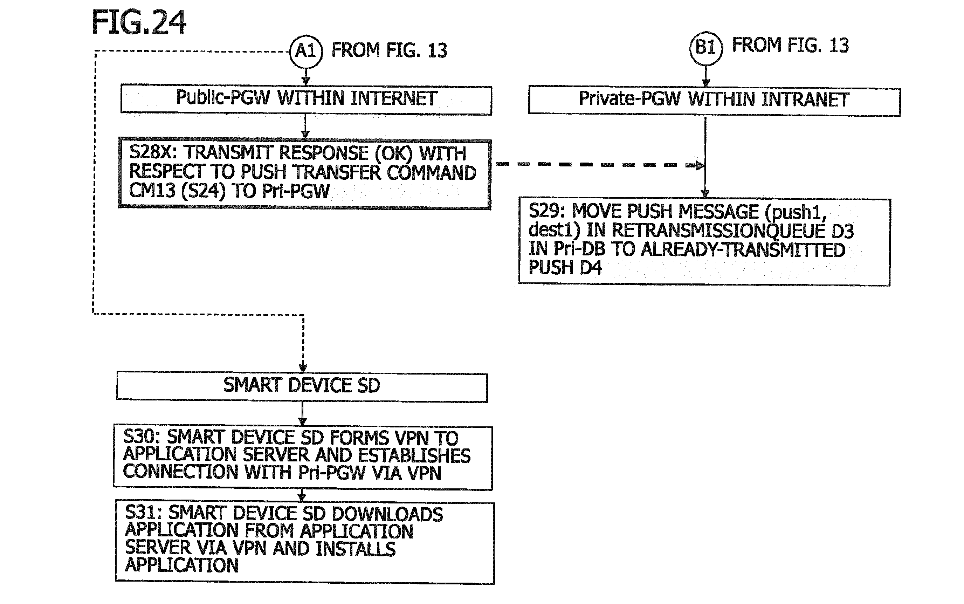

FIG. 24 is a first flow chart illustrating an application push operation (1) to a terminal within the Internet according to the third embodiment. For the first embodiment, an application push operation (1) to a terminal within the Internet has been presented in FIGS. 13 and 14. In contrast, for this example, processes are performed by the private push gateway Pri-PGW and the public push gateway Pub-PGW according to a flow chart illustrated in FIG. 24 instead of FIG. 14. Therefore, a first flow chart illustrating an application push operation (1) to a terminal within the Internet according to the third embodiment is FIGS. 13 and 24.

In FIG. 24, as depicted with bold frames, in a process that differs from the first embodiment illustrated in FIG. 14, the public push gateway Pub-PGW transmits "OK" indicating that transmission of a push message has been performed and a push reception notification has been received from the terminal by including "OK" in a response to the private push gateway Pri-PGW with respect to the push transfer command CM1 in step S24 illustrated in FIG. 13. While the public push gateway Pub-PGW transmits the transmission completion notification command CM3 to the private push gateway Pri-PGW in the first embodiment illustrated in FIG. 14, "OK" is transmitted as a response to the push transfer command CM1 in the third embodiment illustrated in FIG. 24.

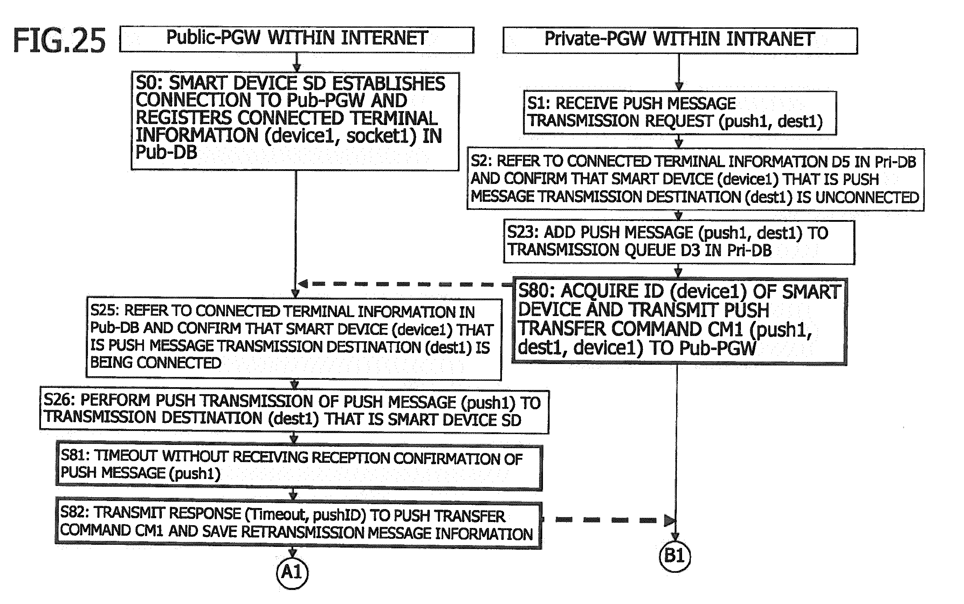

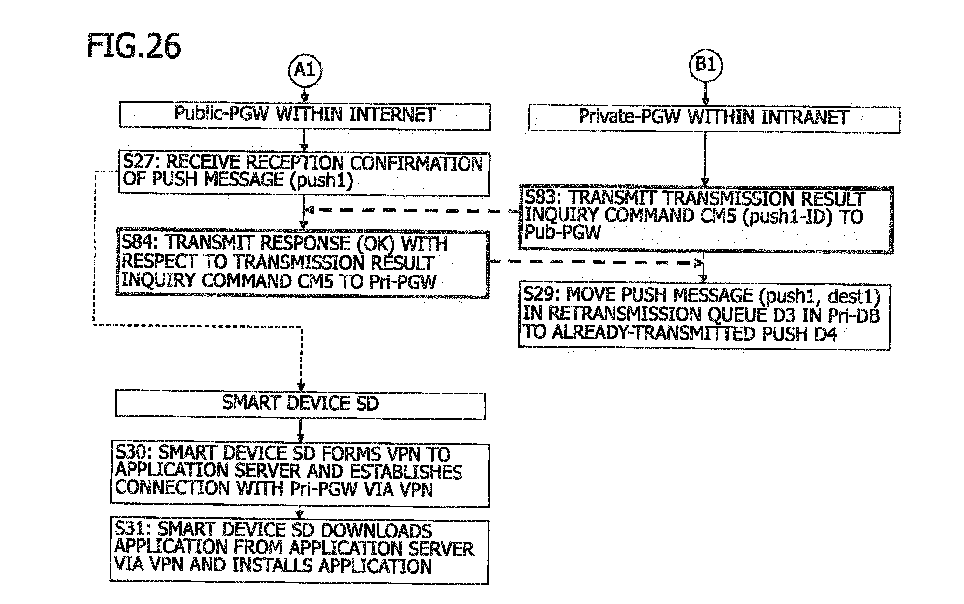

FIGS. 25 and 26 are a second flow chart illustrating an application push operation (1) to a terminal within the Internet according to the third embodiment. For the first embodiment, an application push operation (1) to a terminal within the Internet has been presented in FIGS. 13 and 14. In contrast, for this example, processes are performed by the private push gateway Pri-PGW and the public push gateway Pub-PGW according to the flow chart illustrated in FIGS. 25 and 26 instead of FIGS. 13 and 14.

The flow chart of FIGS. 25 and 26 represents an example of using the push transfer command CM1 and the transmission result inquiry command CM5. As depicted with a bold frame, a process illustrated in FIG. 25 that differs from FIG. 13 is a process (S80) in which the private push gateway Pri-PGW transmits a push transfer command CM1 (push1, dest1, device1) to the public push gateway Pub-PGW. The push transfer command CM1 includes a push message push1.

Other processes that differ from FIG. 13 includes a process (S81) for detecting a timeout where a push message is transmitted by the public push gateway Pub-PGW to a terminal but a reception confirmation is not received from the terminal and a process (S82) in which, due to the timeout, the public push gateway Pub-PGW includes "TIMEOUT" and a push message ID (pushID) in a response to the push transfer command CM1 and sends back the response to the private push gateway Pri-PGW.

In the process S82, furthermore, the public push gateway Pub-PGW saves a push message ID (pushID), a terminal ID (device1), and a transmission status (for example, currently retransmitting) of a push message as retransmitted message information in the database Pub-DB. Specifically, since a "TIMEOUT" response to the push transfer command CM1 means that a transmission result of a push message to the terminal SD is pending, the public push gateway Pub-PGW has to record a transmission status of the push message in the database Pub-DB. However, the retransmitted message information includes an ID (pushID) of the push message instead of the push message (push1) itself. Therefore, the retransmitted message information described above is recorded in addition to connected terminal information D5 and cooperating GW information D6 in the database Pub-DB of the public push gateway Pub-PGW illustrated in FIG. 5.

In addition, processes illustrated in FIG. 26 that differ from FIG. 14 include a process (S83) in which the private push gateway Pri-PGW transmits a transmission result inquiry command CM5 (push1-ID) to the public push gateway Pub-PGW in correspondence to the "TIMEOUT" response and a process (S84) in which the public push gateway Pub-PGW sends back a response (OK) in response to the transmission result inquiry command CM5 (push1-ID). In FIG. 26, the public push gateway Pub-PGW receives the transmission result inquiry command CM5 (push1-ID) from the private push gateway Pri-PGW after receiving (S27) a reception confirmation of a push message from a terminal. When the public push gateway Pub-PGW receives a reception confirmation from the terminal (S27), the public push gateway Pub-PGW changes a transmission status of retransmitted message information in the database Pub-DB to "OK" indicating already transmitted. Furthermore, in response to a subsequent transmission result inquiry command CM5 (push1-ID), since the transmission status corresponding to the ID of the push message is "OK" indicating already transmitted, the public push gateway Pub-PGW sends back an "OK" response (S84).

In the process described above, when the private push gateway Pri-PGW receives "TIMEOUT" as a response to the push transfer command CM1, the private push gateway Pri-PGW may sometimes be able to receive a response indicating reception already confirmed by simply transmitting the transmission result inquiry command CM5 together with an ID of a push message without having to once again transfer the push message. Therefore, the number of times the push message with a large amount of data is transferred by the private push gateway Pri-PGW can be reduced.

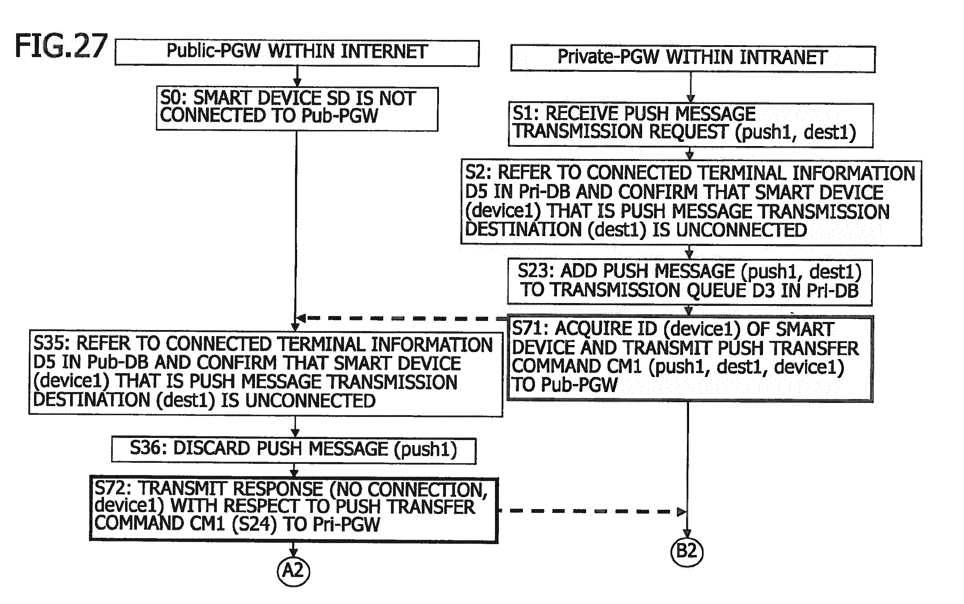

FIGS. 27, 28, and 29 are flow charts illustrating an application push operation (2) to a terminal within the Internet according to the third embodiment. Flow charts of an application push operation (2) to a terminal within the Internet according to the first embodiment have been presented in FIGS. 17, 18, and 19. In FIGS. 17, 18, and 19, when the private push gateway Pri-PGW does not receive a transmission completion notification CM3 indicating that a reception confirmation has been received with respect to a push transfer command CM1, a retransmission inquiry command CM2 is transmitted when the public push gateway Pub-PGW establishes a connection with a terminal and the private push gateway Pri-PGW once again transmits the push transfer command CM1 in response to the retransmission inquiry command CM2 so as to retransmit a push message.

The flow charts of FIGS. 27, 28, and 29 represent an example of using the push transfer command CM1 and the connection inquiry command CM4. In this example, the connection inquiry command CM4 and a response thereto are used in place of the retransmission inquiry command CM2 by the public push gateway Pub-PGW.

As depicted with a bold frame, a process illustrated in FIG. 27 that differs from FIG. 17 is a process (S71) in which the private push gateway Pri-PGW transmits a push transfer command CM1 (push1, dest1, device1) to the public push gateway Pub-PGW. The push transfer command CM1 includes a push message push1.

Furthermore, as other processes that differ from FIG. 17, when the public push gateway Pub-PGW confirms that the terminal is unconnected (S35), the public push gateway Pub-PGW discards a push message (S36), and subsequently includes "no connection" and "device ID" in a response to the push transfer command CM1 and sends back the response to the private push gateway Pri-PGW (S72). As a result, since the public push gateway Pub-PGW is unable to transmit a push message to the terminal, the push message is discarded to prevent the push message from being left stored in a server on the Internet. Processes other than those described above are the same as those illustrated in FIG. 17.

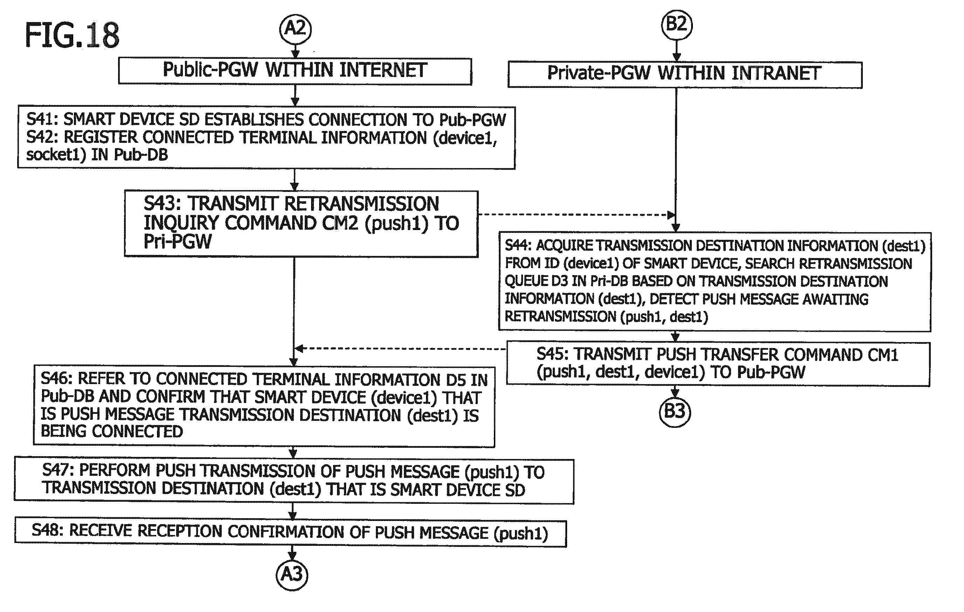

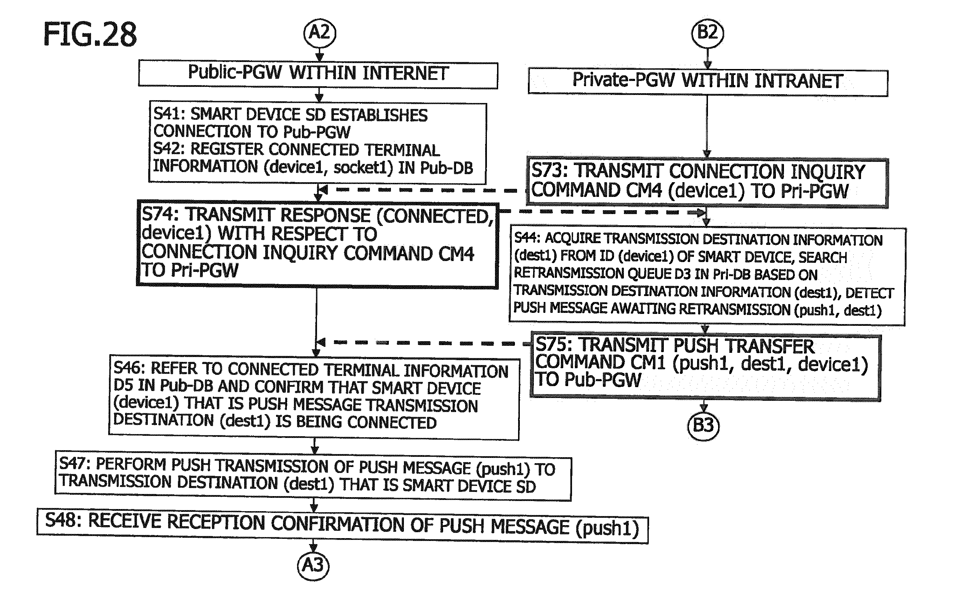

Next, as depicted with a bold frame, a process illustrated in FIG. 28 that differs from FIG. 18 is a process (S73) in which the private push gateway Pri-PGW transmits the connection inquiry command CM4 (device1) to the public push gateway Pub-PGW at a prescribed timing. Since the terminal has established connection (S41, S42) immediately prior to this process, in response to the connection inquiry command CM4 (device1), the public push gateway Pub-PGW performs a process (S74) of sending back a response including

"connected" and "device1". This process also differs from FIG. 18. In addition, the private push gateway Pri-PGW transmits the push transfer command CM1 by including a push message push1, transmission destination information dest1, and a device ID (device1) corresponding to the terminal device1 having established the connection in the push transfer command CM1 (S75). Processes other than those described above are the same as those illustrated in FIG. 18.

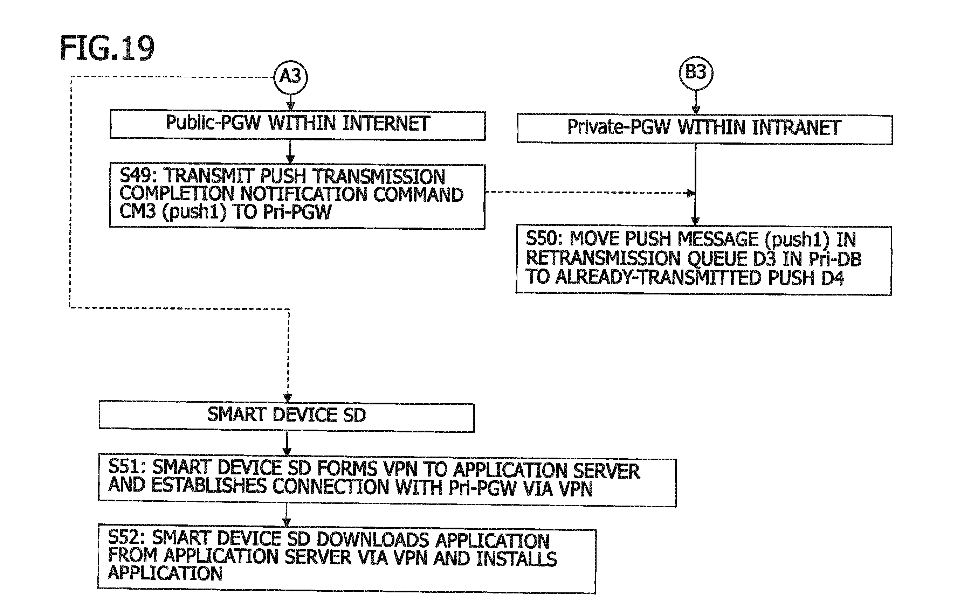

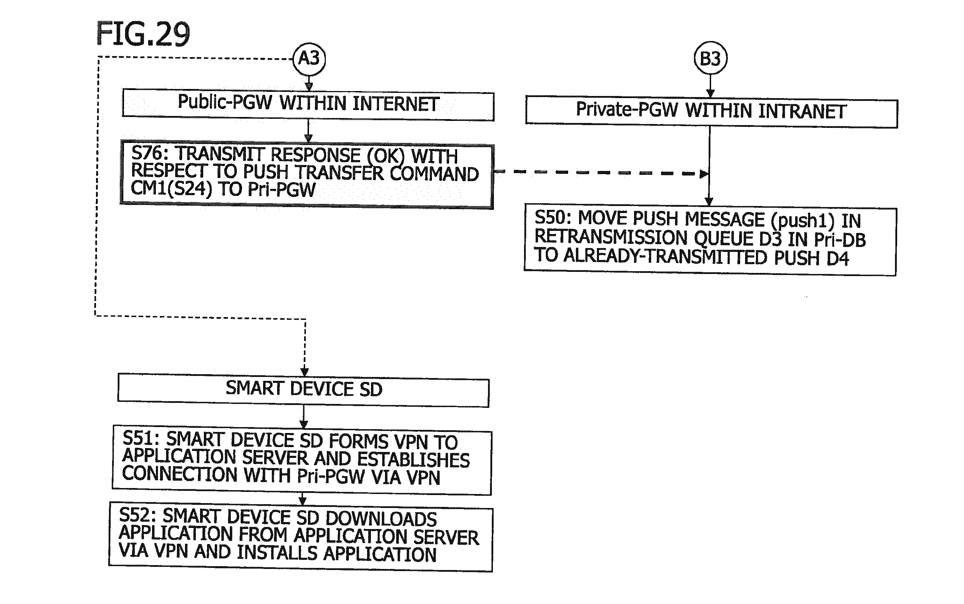

Furthermore, as depicted with a bold frame, FIG. 29 differs from FIG. 19 in that, in response to the push transfer command CM1, the public push gateway Pub-PGW sends back an "OK" response indicating that a reception confirmation which confirms reception of a push message has been received from the terminal (S76). Processes other than those described above are the same as those illustrated in FIG. 19.

As described above, the connection inquiry command CM4 is used in place of the retransmission inquiry command CM2 according to the first embodiment, and information equivalent to the retransmission inquiry command CM2 is transmitted from the public push gateway Pub-PGW to the private push gateway Pri-PGW as a response in a connected state, which is established by transmission of the connection inquiry command CM4.

### [Fourth embodiment]

Using a seamless push system realizes a multi-tenant type service in which a plurality of push services can be received by a single terminal.

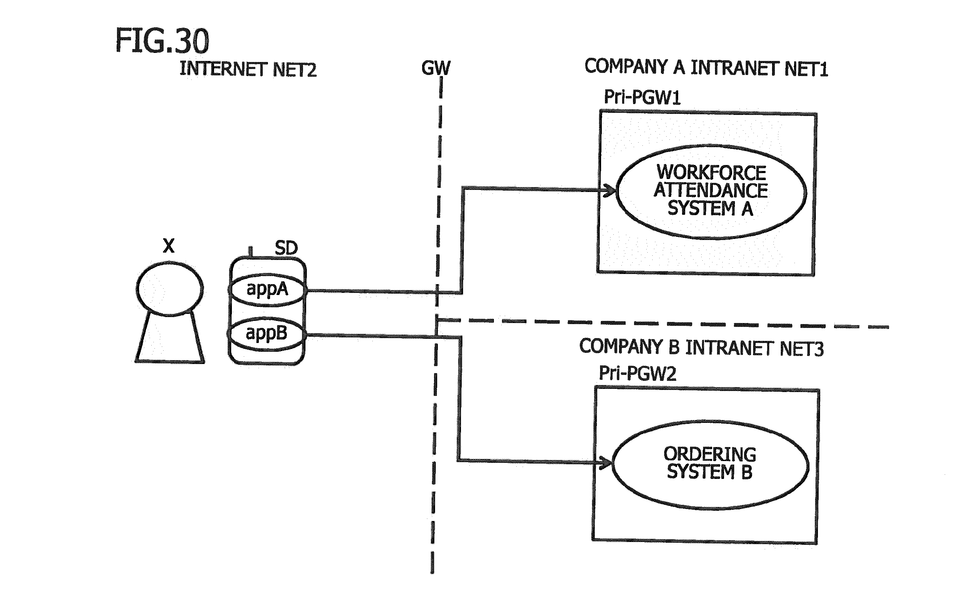

FIG. 30 is a diagram illustrating a multi-tenant type push service. In this example, it is assumed that a user X that owns a terminal SD is temporarily dispatched from a company A to a company B. In this case, the user X has to access a workforce attendance system A of the company A in order to perform workforce attendance management at the company A that is a dispatching party. In addition, the user X has to access an ordering system B of the company B in order to perform an ordering operation at the company B that is a dispatch client. In this case, the workforce attendance system A includes a private push gateway Pri-PGW1. In addition, the ordering system B includes a private push gateway Pri-PGW2.

In this case, applying a seamless push service enables the user X to access both the workforce attendance system A of the company A and the ordering system B of the company B with a single terminal SD and improves work efficiency. However, when the workforce attendance system A and the ordering system B are configured to individually assign transmission destination information (dest) for transmitting a push message to the terminal SD, a situation may occur in which both systems A and B assign same transmission destination information (dest1) to the terminal SD. When the same transmission destination information is redundantly assigned, the workforce attendance system A and the ordering system B end up transmitting push messages to the same transmission destination information (dest1). As a result, the terminal SD is unable to distinguish which system is responsible for the push message and determine from which system an application is to be downloaded based on the push message.

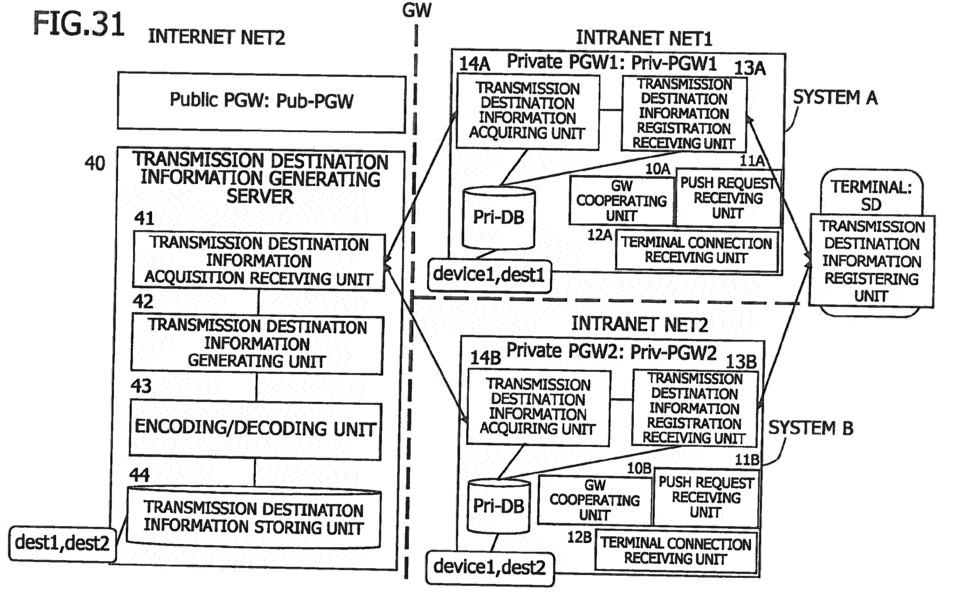

FIG. 31 is a configuration diagram of a seamless push system according to a fourth embodiment. In the fourth embodiment, a transmission destination information generating server 40 is provided to be shared by systems within a plurality of intranets. The transmission destination information generating server 40 may be provided inside a public push gateway Pub-PGW. In addition, in response to an initial registration request for transmission destination information from the terminal SD to each system, each system requests initial registration of transmission destination information to the transmission destination information generating server 40, and the transmission destination information generating server 40 generates unique transmission destination information for each system and sends back the transmission destination information to each system. Subsequently, the uniquely generated transmission destination information is initially registered in the private push gateways Pri-PGW1 and Pri-PGW2 of the respective systems and in the terminal SD.

To this end, the private push gateway Pri-PGW1 of the system A includes a transmission destination information registration receiving unit 13A and a transmission destination information acquiring unit 14A in addition to a GW cooperating unit 10A, a push request receiving unit 11A, a terminal connection receiving unit 12A, and a database Pri-DB. In a similar manner, the private push gateway Pri-PGW2 of the system B also includes a transmission destination information registration receiving unit 13B and a transmission destination information acquiring unit 14B in addition to a GW cooperating unit 10B, a push request receiving unit 11B, a terminal connection receiving unit 12B, and a database Pri-DB.

In addition, the transmission destination information generating server 40 includes a processor, a memory, an input/output device, a communication device, and a storage medium storing a program in a similar manner to the push gateway PGW illustrated in FIG. 20 and constructs a transmission destination information acquiring unit 41, a transmission destination information generating unit 42, and an encoding/decoding unit 43 as the processor executes the program. Furthermore, a transmission destination information storing unit 44 is a storage medium which encodes and stores generated transmission information and an ID of a terminal SD associated with the generated transmission information.

A registration process of transmission destination information of a push message is specifically performed as follows.

The terminal SD transmits a transmission destination information registration request together with a device ID (device1) to the transmission destination information registration receiving unit 13A of the private push gateway Pri-PGW1 of the system A. In response thereto, the transmission destination information acquiring unit 14A transmits an acquisition request for transmission destination information to the transmission destination information acquiring unit 41 of the transmission destination information generating server 40. At the transmission destination information generating server 40, the transmission destination information generating unit 42 generates transmission destination information (for example, dest1) that does not overlap with transmission destination information in the transmission destination information storing unit 44 with respect to the device ID (device1). The generated transmission destination information (dest1) is encoded by the encoding/decoding unit 43 and stored in the transmission destination information storing unit 44. In addition, the transmission destination information acquiring unit 41 sends back the generated transmission destination information (dest1) to the transmission destination information acquiring unit 14A in the private push gateway Pri-PGW1. The transmission destination information (dest1) is stored in association with the device ID (device1) in the database Pri-DB. Furthermore, the transmission destination information registration receiving unit 13A transmits the received transmission destination information (dest1) to the terminal SD and a transmission destination information registering unit in the terminal SD stores the transmission destination information (dest1) in a database.

The terminal SD also transmits the transmission destination information registration request together with the device ID (device1) to the transmission destination information registration receiving unit 13B of the private push gateway Pri-PGW2 of the system B. In response thereto, a same process as described above is executed, the transmission destination information generating server 40 generates and sends back new transmission destination information (dest2), and the transmission destination information (dest2) is stored in the database Pri-DB in the private push gateway Pri-PGW2 and also registered in the terminal SD.

As described above, since the transmission destination information generating server 40 that is provided to be shared by a plurality of systems generates unique transmission destination information for each system, unique transmission destination information is registered with respect to a plurality of systems. As a result, a seamless push system can be suitably provided with respect to a multi-tenant type service.

In the embodiment presented above, a situation where an application push service is performed in which a push message is transmitted to a terminal and the terminal downloads an application using access information in the push message has been described. However, the embodiment presented above can also be applied to a situation where a push service is performed in which a push message is transmitted to a terminal.

### EXPLANATION OF SYMBOLS

Pri-PGW: Private push gateway
Pub-PGW: Public push gateway
App-ser: Application server
Pu-req: Push requester device
NET1: Intranet
NET2: Internet
SD: Terminal, Smart device, Smart phone

## Claims

1. A seamless push system comprising:
a first push gateway (Pri-PGW) which is provided within an intranet (NET1) and which, in response to a transmission request for a push message, transmits the push message to a terminal (SD) in a connected state via an intranet (NET2); and
a second push gateway (Pub-PGW) which is provided within the Internet and which is capable of maintaining a connected state with the terminal via the Internet, wherein
when the terminal is capable of connecting to the Internet,
the second push gateway establishes a connected state from the terminal via the Internet and maintains the connected state,
the first push gateway transfers the push message to the second push gateway in response to the transmission request for the push message, and
the second push gateway transmits the push message via the Internet to the terminal in the connected state in response to the transfer of the push message.

2. The seamless push system according to claim 1, further comprising
an application server (APP-ser) which is provided within the intranet and which causes the terminal to download an application in correspondence with an access by the terminal, wherein
the application server transmits, via a private network (VPN) constructed between a terminal having received the push message and the application server, an application corresponding to the push message to the terminal.

3. The seamless push system according to claim 2, wherein
when the private network is being constructed, the first push gateway establishes a connected state from the terminal via the private network and maintains the connected state, and the first push gateway further transmits a different push message to the terminal via the private network.

4. The seamless push system according to claim 2, wherein
when the terminal is capable of connecting to the intranet, the first push gateway establishes a connected state with the terminal via the intranet and transmits the push message to the terminal via the connected state, and when the terminal is capable of connecting to the Internet, the second push gateway establishes a connected state with the terminal via the Internet and transmits the push message to the terminal via the connected state.

5. The seamless push system according to claim 4, wherein
the terminal includes an application downloading unit which downloads the application from the application server via the private network in response to reception of the push message,
the terminal and the first push gateway store a terminal ID and push transmission destination information corresponding to the downloading unit of the terminal,
the first push gateway and the second push gateway store a terminal ID of the terminal that maintains connected states with the respective push gateways,
when a terminal corresponding to the push transmission destination information is not in a connected state with the first push gateway, in response to receiving the push message together with the push transmission destination information, the first push gateway adds a corresponding terminal ID to the push transmission destination information and transmits the push message and the push transmission destination information to the second push gateway, and
the second push gateway checks whether or not the terminal is in a connected state with the second push gate way based on the transferred terminal ID and, when the terminal is in the connected state with the second push gate way, transmits the push message together with the push transmission destination information to the terminal in the connected state.

6. The seamless push system according to claim 5, wherein
the terminal includes a plurality of the downloading units, and
the terminal hands over the transmitted push message to a downloading unit corresponding to the push transmission destination information among the plurality of downloading units, and the downloading unit having received the push message downloads an application corresponding to the push transmission destination information from the application server.

7. The seamless push system according to claim 1 or 4, wherein
when the terminal is capable of connecting to the Internet,
the first push gateway stores the push message of the transmission request in a retransmission queue according to a transmission destination terminal, which is for a push message of the transmission request, not being in a connected state, and further transfers the push message of the transmission request to the second push gateway,
the second push gateway checks whether or not the transmission destination terminal of the push message is in a connected state with the second push gateway in response to the transfer of the push message, transmits the push message via the Internet to a terminal in the connected state with the second push gateway, and transmits a push transmission completion notification to the first push gateway in response to a reception notification of the push message from the terminal, and
the first push gateway changes the push message in the retransmission queue to an already transmitted message in response to the push transmission completion notification.

8. The seamless push system according to claim 7, wherein
the second push gateway checks whether or not a transmission destination terminal of the push message is in a connected state with the second push gateway in response to the transfer of the push message and does not store the transferred push message in a database when the transmission destination terminal of the push message is not in the connected state with the second push gateway,
the second push gateway transmits, when the terminal subsequently establishes a connected state with the second push gateway via the Internet, a retransmission inquiry with respect to the terminal having established the connection to the first push gateway, and
the first push gateway transmits a push message for the terminal having established the connection, which is stored in the retransmission queue, to the second push gateway in response to the retransmission inquiry.

9. A method of transmitting a push message by using a push system including:
a first push gateway (Pri-PGW) which is provided within an intranet (NET1) and which, in response to a transmission request for a push message, transmits the push message to a terminal (SD) in a connected state via the intranet; and
a second push gateway (Pub-PGW) which is provided within an Internet (NET2) and which is capable of maintaining a connected state with the terminal via the Internet,
the push method comprising:
when the terminal is capable of connecting to the Internet,
operating the second push gateway to be in a connected state from the terminal via the Internet and maintain the connected state;
operating the first push gateway to transfer the push message to the second push gateway in response to the transmission request for the push message;
operating the second push gateway to transmit the push message via the Internet to the terminal in the connected state in response to the transfer of the push message; and
operating the terminal having received the push message to download an application corresponding to the push message from an application server via a private network constructed between the terminal and the application server.

10. The method according to claim 9, wherein the push system further includes an application server which is provided within the intranet and which causes the terminal to download an application in correspondence with an access by the terminal,
the method further comprising
operating the application server to transmit, via a private network constructed between a terminal having received the push message and the application server, an application corresponding to the push message to the terminal.

11. The method according to claim 9, further comprising, when the private network is being constructed, operating the first push gateway to be in a connected state from the terminal via the private network and maintain the connected state, and operating the first push gateway to further transmit a different push message to the terminal via the private network.

12. The method according to claim 9, further comprising:
when the terminal is capable of connecting to the Internet,
operating the first push gateway to store the push message of the transmission request in a retransmission queue according to a transmission destination terminal, which is for a push message of the transmission request, not being in a connected state, and further to transfer the push message of the transmission request to the second push gateway;
operating the second push gateway to check whether or not the transmission destination terminal of the push message is in a connected state with the second push gateway in response to the transfer of the push message, and transmit the push message via the Internet to a terminal in the connected state with the second push gateway, and moreover transmit a push transmission completion notification to the first push gateway in response to a reception notification of the push message from the terminal; and
operating the first push gateway to change the push message in the retransmission queue to an already transmitted message in response to the push transmission completion notification.

13. The method according to claim 12, further comprising:
operating the second push gateway to check whether or not a transmission destination terminal of the push message is in a connected state with the second push gateway in response to the transfer of the push message and not to store the transferred push message in a database when the transmission destination terminal of the push message is not in the connected state with the second push gateway;
operating the second push gateway to transmit, when the terminal subsequently establishes a connected state with the second push gateway via the Internet, a retransmission inquiry with respect to the terminal having established the connection to the first push gateway; and
operating the first push gateway to transmit a push message for the terminal having established the connection which is stored in the retransmission queue to the second push gateway in response to the retransmission inquiry.

14. A method of providing an application push service by using a push system including:
a first push gateway (Pri-PGW) which is provided within an intranet and which, in response to a transmission request for a push message, transmits the push message to a terminal (SD) in a connected state via the intranet; and
a second push gateway (Pub-PGW) which is provided within an Internet and which is capable of maintaining a connected state with the terminal via the Internet,
the push method comprising:
when the terminal is capable of connecting to the Internet,
operating the second push gateway to be in a connected state from the terminal via the Internet and maintain the connected state;
operating the first push gateway to transfer the push message to the second push gateway in response to the transmission request for the push message; and
operating the second push gateway to transmit the push message via the Internet to the terminal in the connected state in response to the transfer of the push message.

15. A first push gateway (Pri-PGW) which is provided within an intranet (NET1) and which is capable of communicating with a second push gateway (Pub-PGW) provided within an Internet (NET2),
the first push gateway comprising:
a push message request receiving unit which transmits, in response to a transmission request for a push message, the push message to a terminal (SD) in a connected state via the intranet;
a terminal connection receiving unit which establishes a connected state with a terminal via the intranet in response to a connection request from the terminal; and
a gateway cooperating unit capable of communicating with the second push gateway, wherein
when a connected state is formed from the terminal in the second push gateway and the connected state is being maintained by the second push gateway,
the first push gateway transfers the push message to the second push gateway in response to a transmission request for the push message and causes the second push gateway to transmit the push message to the terminal in the connected state via the Internet.

16. The first push gateway according to claim 15, wherein
a private network (VPN) is constructed with an application server within the intranet by a terminal having received the push message, and an application corresponding to the push message is downloaded from the application server to the terminal, and
when the private network is being constructed, a connected state is formed in the first push gateway from the terminal via the private network and the first push gateway maintains the connected state, and the first push gateway further transmits a different push message to the terminal via the private network.

17. The first push gateway according to claim 15, wherein
the first push gateway stores the push message of the transmission request in a retransmission queue according to a transmission destination terminal, which is for a push message of the transmission request, not being in a connected state, and further transfers the push message of the transmission request to the second push gateway,
in the second push gateway, whether or not the transmission destination terminal of the push message is in a connected state with the second push gateway is checked in response to the transfer of the push message, the push message is transmitted via the Internet to a terminal in the connected state with the second push gateway, and a push transmission completion notification is transmitted to the first push gateway in response to a reception notification of the push message from the terminal, and
the first push gateway changes the push message in the retransmission queue to an already transmitted message in response to the push transmission completion notification.

18. The first push gateway according to claim 17, wherein
in the second push gateway, whether or not a transmission destination terminal of the push message is in a connected state with the second push gateway is checked in response to the transfer of the push message and the transferred push message is not stored in a database when the transmission destination terminal of the push message is not in the connected state with the second push gateway,
in the second push gateway, when the terminal subsequently establishes a connected state with the second push gateway via the Internet, a retransmission inquiry with respect to the terminal having established the connection is transmitted to the first push gateway, and
the first push gateway transmits a push message for the terminal having established the connection which is stored in the retransmission queue to the second push gateway in response to the retransmission inquiry.

19. The seamless push system according to claim 8, wherein
the first push gateway accesses the second push gateway and establishes a connected state with the second push gateway, the second push gateway repetitively replies to the first push gateway to maintain the connected state with the second push gateway, and
the second push gateway transmits the push transmission completion notification or the retransmission inquiry to the first push gateway via the maintained connected state.

20. The seamless push system according to claim 7, wherein
the second push gateway transmits the push completion notification in a response to the transfer of the push message.

21. The seamless push system according to claim 20, wherein
the second push gateway checks whether or not a transmission destination terminal of the push message is in a connected state with the second push gateway in response to the transfer of the push message and does not store the transferred push message in a database when the transmission destination terminal of the push message is not in the connected state with the second push gateway, and transmits the fact that the transmission destination terminal is not in the connected state with the second push gateway in a response to the transfer of the push message,
the first push gateway transmits a connection inquiry command that inquires whether or not the terminal has subsequently established the connected state with the second push gateway via the Internet to the second push gateway,
the second push gateway transmits, when the terminal subsequently establishes the connected state with the second push gateway via the Internet, the connected state in a response to the connection inquiry command, and
the first push gateway transmits a push message for the terminal having established the connection which is stored in the retransmission queue to the second push gateway in response of the connected state.

22. The seamless push system according to claim 20, wherein
the second push gateway transmits the push message to the transmission destination terminal that is in the connected state with the second push gateway in response to the transfer of the push message and transmits a timeout in a response to transfer of the push message when a reception confirmation is not obtained from the transmission destination terminal,
the first push gateway subsequently transmits a transmission result inquiry command that inquires about the reception confirmation from the transmission destination terminal to the second push gateway,
the second push gateway transmits reception of the reception confirmation in a response to the transmission result inquiry command when the reception confirmation is received from the transmission destination terminal, and
the first push gateway changes the push message in the retransmission queue to an already transmitted message in response to the reception of the reception confirmation.

23. The seamless push system according to claim 1, further comprising
a transmission destination information generating server provided so as to be shared by a plurality of first push gateways, wherein
in response to a request for generating transmission destination information that is transmitted by the plurality of first push gateways in correspondence to a request from the terminal, the transmission destination information generating server generates unique transmission destination information with no overlap among the plurality of first push gateways and sends back the unique transmission destination information to the first push gateway having transmitted the request for generating transmission destination information.
